(19) Europäisches Patentamt
European Patent Office
Office européen des brevets

(11) EP 2 234 191 B1

(12) # EUROPEAN PATENT SPECIFICATION

(45) Date of publication and mention of the grant of the patent:
**02.04.2014 Bulletin 2014/14**

(21) Application number: **09725627.5**

(22) Date of filing: **16.02.2009**

(51) Int Cl.:
***H01M 4/60*** *(2006.01)* ***H01M 10/36*** *(2010.01)*
***H01M 10/052*** *(2010.01)* ***H01G 9/04*** *(2006.01)*
***H01M 4/137*** *(2010.01)* ***H01M 4/90*** *(2006.01)*

(86) International application number:
**PCT/JP2009/000610**

(87) International publication number:
**WO 2009/118989 (01.10.2009 Gazette 2009/40)**

(54) **ELECTRODE ACTIVE MATERIAL FOR ELECTRIC STORAGE DEVICE, ELECTRIC STORAGE DEVICE, ELECTRONIC EQUIPMENT, AND TRANSPORTATION EQUIPMENT**

Elektrodenaktives Material für Speichervorrichtung für elektrische Energie, Speichervorrichtung für elektrische Energie, elektronische Ausrüstung und Transportausrüstung

MATÉRIAU ACTIF D'ÉLECTRODE POUR DISPOSITIF DE STOCKAGE ÉLECTRIQUE, DISPOSITIF DE STOCKAGE ÉLECTRIQUE, ÉQUIPEMENT ÉLECTRONIQUE ET ÉQUIPEMENT DE TRANSPORT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.03.2008 JP 2008087867**

(43) Date of publication of application:
**29.09.2010 Bulletin 2010/39**

(73) Proprietor: **Panasonic Corporation**
**Kadoma-shi**
**Osaka 571-8501 (JP)**

(72) Inventors:
- **OHTSUKA, Yu**
**1-61 Shiromi 2-chome,**
**Chuo-ku, Osaka-shi,**
**Osaka 540-6207 (JP)**
- **HOJO, Nobuhiko**
**1-61 Shiromi 2-chome,**
**Chuo-ku, Osaka-shi,**
**Osaka 540-6207 (JP)**
- **YOSHIDA, Junichi**
**Nishikyo-ku, Kyoto-shi,**
**Kyoto 615-8530 (JP)**
- **NOKAMI, Toshiki**
**Nishikyo-ku, Kyoto-shi,**
**Kyoto 615-8530 (JP)**

(74) Representative: **TBK**
**Bavariaring 4-6**
**80336 München (DE)**

(56) References cited:
**EP-A1- 2 128 121**
**WO-A1-2007/116926**
**WO-A1-2008/108105**
**JP-A- 4 087 258**
**JP-A- 11 126 610**
**JP-A- 56 086 466**
**JP-A- 2007 305 430**
**JP-A- 2008 112 630**
**US-A- 4 343 871**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 234 191 B1

## Description

Technical Field

The present invention relates to an electrode active material for a power storage device and a power storage device, and electronic equipment and transportation equipment. More particularly, the invention mainly relates to an improvement of an electrode active material for a power storage device.

Background Art

With the recent development of mobile communications equipment, portable electronic equipment, and the like, there has been a significant increase in the demand for batteries used as power sources of such equipment. Of such batteries, lithium secondary batteries capable of repeated charge-discharge have a high electromotive force and a high energy density, and are therefore widely used as power sources of portable electronic equipment.

As the size and the weight of portable electronic equipment are decreased, there is a growing need to increase the energy density of batteries; for example, development of a novel electrode active material having a high energy density is desired. Since an increase in the energy density of an electrode active material directly leads to an increase in the energy density of a battery itself, the research and development is being vigorously conducted on a positive electrode active material and a negative electrode active material.

For example, use of an organic compound for the electrode active material is being investigated. Organic compounds have a small specific gravity of about 1 g/cm$^3$, and also have a smaller weight compared to, for example, oxides, such as lithium cobalt oxide, that are currently used as the positive electrode active material of lithium secondary batteries.

As the investigation as to the use of an organic compound as the electrode active material, it has been proposed to use 9,10-phenanthrenequinone as an organic quinone compound for the positive electrode active material, and use lithium ion as the counter ion in a coin secondary battery containing a non-aqueous electrolyte (e.g., see Patent Document 1). In the battery of Patent Document 1, the positive electrode contains 9,10-phenanthrenequinone and a conductive agent such as carbon. The counter electrode for the positive electrode is made of metal lithium. The electrolyte is made of a propylene carbonate solution in which 1 M of lithium perchlorate is dissolved.

However, 9,10-phenanthrenequinone used as the positive electrode active material in Patent Document 1 tends to be dissolved in the electrolyte. The solubility greatly depends on the components and amount of the electrolyte as well as the battery configuration. Patent Document 1 does not describe the dissolution of the positive electrode active material in the electrolyte; however, in view of the fact that the discharge capacity was decreased as a result of charge-discharge cycles, there was a problem in that the dissolution of the active material in the electrolyte was not sufficiently inhibited. In order to put 9,10-phenanthrenequinone into practical use as an electrode active material, it was necessary to inhibit the dissolution in the electrolyte.

In general, low-molecular-weight organic compounds have the problem that they tend to be dissolved in organic solvents. For this reason, when an organic compound is used as an electrode active material, the active material tends to be dissolved in a non-aqueous electrolyte containing an organic solvent, and it is difficult to use an organic compound as an electrode active material for the following two reasons, namely, (A) and (B).

(A) Low electron conductivity between the dissolved active material and the current collector results in reduced reactivity.

(B) As a result of the active material being dissolved in the electrolyte, the proportion of the amount of the electrode active material contributing to redox decreases, thus decreasing the battery capacity.

Examples of possible methods for solving the above-described problems indude polymerization of an active material that is an organic compound (hereinafter, referred to as an "organic active material"), solidification of the electrolyte, polymerization of the electrolyte and the like.

To realize polymerization of the organic active material, for example, it is conceivable to use conductive polymers, typified by polyaniline, polythiophene, and polypyrrole, as an organic polymer compound capable of undergoing redox. A $\pi$-electron cloud of conjugated system covers the entire molecule of such a conductive polymer. For example, polylhiophene has a structure in which thiophene rings are adjacent to each other. Theoretically, it is believed that a one-electron reaction is caused by one thiophene ring; however, since thiophene becomes charged during a redox reaction, electronic repulsion occurs between the adjacent thiophene rings, so that the actual number of reaction electrons is about 0.5 electron. For the same reason, the number of reaction electrons is small also for polyaniline, polypyrrole, and the like. Accordingly, the above-described conductive polymers have a problem in that the number of reaction electrons

is small.

As a method for solving such a problem, it has been proposed to use, for example, a conductive polymer having a quinone site that causes a two-electron reaction as the positive electrode active material for secondary batteries (e.g., see Patent Document 2). However, even if a quinone compound having a large number of reaction electrons is introduced into a conductive polymer having a small number of reaction electrons, the numbers of reaction electrons are balanced and thus the number of reaction electrons of the polymer as a whole is less than two. Accordingly, the two-electron reaction of a quinone compound cannot be fully utilized.

An electrode for batteries that contains a polymer compound containing a nitrogen atom in the molecule or/and a quinone compound has also been proposed (e.g., see Patent Document 3). In Patent Document 3, in order to improve the reversibility of the reaction, a proton is used as a mobile carrier by using a water-soluble electrolyte. Also, in order to increase the energy density of the active material, a composite material of a quinone compound and a conductive polymer such as polyaniline is used.

This composite material is obtained by fixing a quinone compound onto polyaniline by using intermolecular force between the polyaniline and the quinone compound that is caused by hydrogen bonding. However, the composite material described in Patent Document 3 uses a proton as a mobile carrier. For this reason, it is not preferable to use this composite material for a high-voltage battery that uses lithium metal as the counter electrode and uses a non-aqueous electrolyte as the electrolyte. Therefore, Patent Documents 2 and 3 do not provide an organic active material that is inhibited from being dissolved in a non-aqueous electrolyte.

It has also been suggested to use a compound having two or more quinone structures in the molecule as an electrode active material in a battery containing an aqueous electrolyte (e.g., see Patent Document 4). Specifically, a multimer of a compound having a quinone structure is formed by heat polymerization, and this is used as the electrode active material. This electrode active material has excellent stability under an oxygen atmosphere. However, suffiaent investigation has not been carried out on the stability of the electrode active material against the electrolyte, and the use of this electrode active material in a battery containing an electrolyte (non-aqueous electrolyte) other than an aqueous electrolyte. Therefore, Patent Document 4 does not provide an organic active material that is inhibited from being dissolved in a non-aqueous electrolyte.

As described above, various efforts have heretofore been made in order to use an organic compound as an electrode active material. However, there is still large room for improvement as to the inhibition of dissolution in a non-aqueous electrolyte in order to achieve an organic active material that can be used for a non-aqueous electrolyte secondary battery that realizes an increased energy density.

Patent Document 1: Laid-Open Patent Publication No. Sho 56-086466
Patent Document 2: Laid-Open Patent Publication No. Hei 10-154512
Patent Document 3: Laid-Open Patent Publication No. Hei 11-126510
Patent Document 4: Laid-Open Patent Publication No. Hei 4-087258

Further, US 4,343,871 A discloses 9,10-phenanthrenequinone as cathode-active material.

EP 2128121 A1, which has been published after the priority date of the present application, discloses a phenanthrenequinone compound represented by the following general formula:

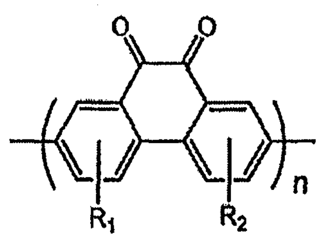

Disclosure of the Invention

Problem to be Solved by the Invention

It is an object of the present invention to provide a novel electrode active material for a power storage device that is inhibited from being dissolved in an electrolyte and that has a high energy density, a power storage device that indudes the aforementioned electrode active material and has a high energy density and excellent charge-discharge cyde characteristics, as well as electronic equipment and transportation equipment that indude the aforementioned

storage device as a power source.

Means for Solving the Problem

The present invention relates to an electrode active material as defined in claim 1 used for a power storage device that converts electron transfer associated with a redox reaction into electric energy, including:

an organic compound having, in the molecule thereof, a plurality of electrode reaction sites that contribute to an electrochemical redox reaction and a linker site that is disposed between the plurality of electrode reaction sites and that does not contribute to the electrochemical redox reaction,
wherein the electrode reaction sites are residues of a 9,10-phenanthrenequinone compound represented by general formula (A), and
the linker site is a residue of an aromatic compound and does not contain any ketone group;

General formula (A):

[Chemical Formula 1]

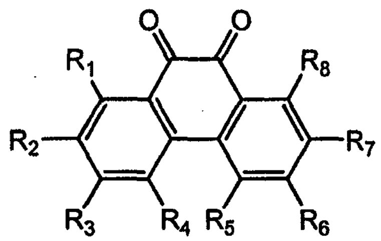

(A)

wherein $R_1$ to $R_8$ each independently represent a hydrogen atom, a fluorine atom, a cyano group, a $C_{1-4}$ alkyl group, a $C_{2-4}$ alkenyl group, a $C_{3-6}$ cycloalkyl group, a $C_{3-6}$ cycloalkenyl group, an aryl group, or an aralkyl group; and each of the groups represented by $R_1$ to $R_8$ optionally has, as a substituent, a group containing at least one atom selected from the group consisting of a fluorine atom, a nitrogen atom, an oxygen atom, a sulfur atom, and a silicon atom.

Hereinafter, a 9,10-phenanthrenequinone compound represented by general formula (A) is referred to as a "9,10-phenanthrenequinone compound (A)".

Preferably, the organic compound serving as the electrode active material for a power storage device of the present invention is a phenanthrenequinone-containing compound represented by general formula (1) (hereinafter, referred to as a "phenanthrenequinone-containing compound (1)"):

$$Q_1\text{-}L_1\text{-}Q_1 \qquad (1)$$

wherein $Q_1$ is an electrode reaction site, and each of two $Q_1$s independently represents a univalent residue of the 9,10-phenanthrenequinone compound (A); and $L_1$ is a linker site and represents a divalent residue of an aromatic compound optionally containing at least one of a sulfur atom and a nitrogen atom and optionally having at least one substituent selected from the group consisting of a fluorine atom, a saturated aliphatic group, and an unsaturated aliphatic group.

Preferably, the organic compound serving as the electrode active material for a power storage device of the present invention is a phenanthrenequinone-containing polymer represented by general formula (2) (referred to as a "phenanthrenequinone-containing polymer (2)"):

$$(\text{-}Q_2\text{-}L_1\text{-})_n \qquad (2)$$

wherein $Q_2$ is an electrode reaction site, and each of n $Q_2$s independently represents a divalent residue of the 9,10-phenanthrenequinone compound (A); $L_1$ is a linker site, and an each of n $L_1$s is independently as defined above; and n is the number of monomer repeat units $\text{-}Q_2\text{-}L_1\text{-}$ and represents an integer of 3 or greater.

Preferably, the organic compound serving as the electrode active material for a power storage device of the present invention is a phenanthrenequinone-containing polymer represented by general formula (3) (referred to as a "phenanthrenequinone-containing polymer (3)"):

$$(\text{-}L_2(Q_1)\text{-})_n \qquad (3)$$

wherein $Q_1$ is an electrode reaction site, and each of n $Q_1$s independently represents a univalent residue of the 9,10-phenanthrenequinone compound (A); each of n $L_2$s independently represents a trivalent residue of an aromatic compound optionally containing at least one of a sulfur atom and a nitrogen atom and optionally having at least one substituent selected from the group consisting of a fluorine atom, a saturated aliphatic group, and an unsaturated aliphatic group; and n is the number of monomer repeat units - $L_2(Q_1)$- and represents an integer of 3 or greater.

Preferably, the linker site is a d i- to trivalent residue of an aromatic compound optionally containing at least one of a sulfur atom and a nitrogen atom and optionally having at least one substituent selected from the group consisting of a fluorine atom, a saturated aliphatic group, and an unsaturated aliphatic group.

Preferably, the aromatic compound is at least one selected from the group consisting of a monocyclic aromatic compound, a fused-ring aromatic compound in which at least two 6-membered aromatic rings are fused, a fused-ring aromatic compound in which at lease one 5-membered aromatic ring and at least one 6-membered aromatic ring are fused, and 5- and 6-membered heterocycic aromatic compounds having a nitrogen atom, a sulfur atom, or an oxygen atom as a heteroatom.

The present invention also relates to a power storage device including a positive electrode, a negative electrode, and an electrolyte and being capable of converting electron transfer associated with a redox reaction into electric energy, wherein at least one of the positive electrode and the negative electrode contains the electrode active material for a power storage device of the present invention.

In a preferable embodiment of the power storage device of the invention, the positive electrode contains, as a positive electrode active material, the electrode active material for a power storage device of the present invention, the negative electrode contains a negative electrode active material capable of absorbing and desorbing lithium ions, and the electrolyte contains a salt inclucing a lithium cation and an anion.

The present invention also relates to electronic equipment including the power storage device of the invention.

The invention also relates to transportation equipment including the power storage device of the invention.

## Effect of the Invention

According to the present invention, it is possible to provide an electrode active material that is inhibited from being dissolved in a non-aqueous electrolyte and that has a high energy density. By using the electrode active material, it is possible to provide a power storage device having a high output, a high capacity, and excellent charge/discharge cyde characteristics.

## Brief Description of the Several Views of the Drawing

FIG 1 is a perspective view schematically showing a configuration of a mobile phone that is one embodiment of the present invention.

FIG 2 is a perspective view schematically showing a configuration of a notebook personal computer that is one embodiment of the present invention.

FIG 3 is a block diagram schematically showing a configuration of a hybrid electric vehicle that is one embodiment of the present invention.

FIG 4 is a cyclic voltammogram of an evaluation battery that uses an electrode active material of the present invention.

FIG 5 is a vertical cross-sectional view schematically showing a configuration of a coin battery that is an example of a power storage device of the present invention.

FIG 6 shows a charge-discharge curve of a coin battery of Example 12.

FIG 7 shows a charge-discharge curve of a coin battery of Example 13.

FIG 8 shows a charge-discharge curve of a coin battery of Example 14.

FIG 9 shows a charge-discharge curve of a coin battery of Example 15.

FIG 10 shows a charge-discharge curve of a coin battery of Example 16.

FIG 11 shows a charge-discharge curve of a coin battery of Example 17.

FIG 12 shows a charge-discharge curve of a coin battery of Example 18.

FIG. 13 shows a charge-discharge curve of a coin battery of Comparative Example 1.

FIG. 14 shows a charge-discharge curve of a coin battery of Example 19.

Best Mode for Carrying Out the Intention

[Electrode Active Material for Power Storage Device]

The present inventors focused their attention on an organic compound containing two ketone groups in the molecule as an organic compound capable of undergoing redox, and conducted extensive studies thereon.

Examples of a diketone compound containing two ketone groups in the molecule indude a quinone compound having ketone groups at the para position (hereinafter, referred to as a "para-quinone compound"), and a quinone compound having ketone groups at the ortho position (hereinafter, referred to as an "ortho-quinone compound").

In such compounds, the ketone groups act as electrode reaction sites, and the ketone groups have a negative charge through a reduction reaction. The redox reaction between a quinone compound and a mobile carrier having a positive charge (hereinafter simply referred to as a "mobile carrier"), when lithium ions are used as the mobile carrier, are as shown in the following reaction schemes (I) and (II). That is, a para-quinone compound undergoes a two-step reaction of schemes (IA) and (IB) shown in reaction scheme (I). An ortho-quinone compound undergoes a two-step reaction of schemes (IIA) and (IIB) shown in reaction scheme (II).

**[Chemical Formula 2]**

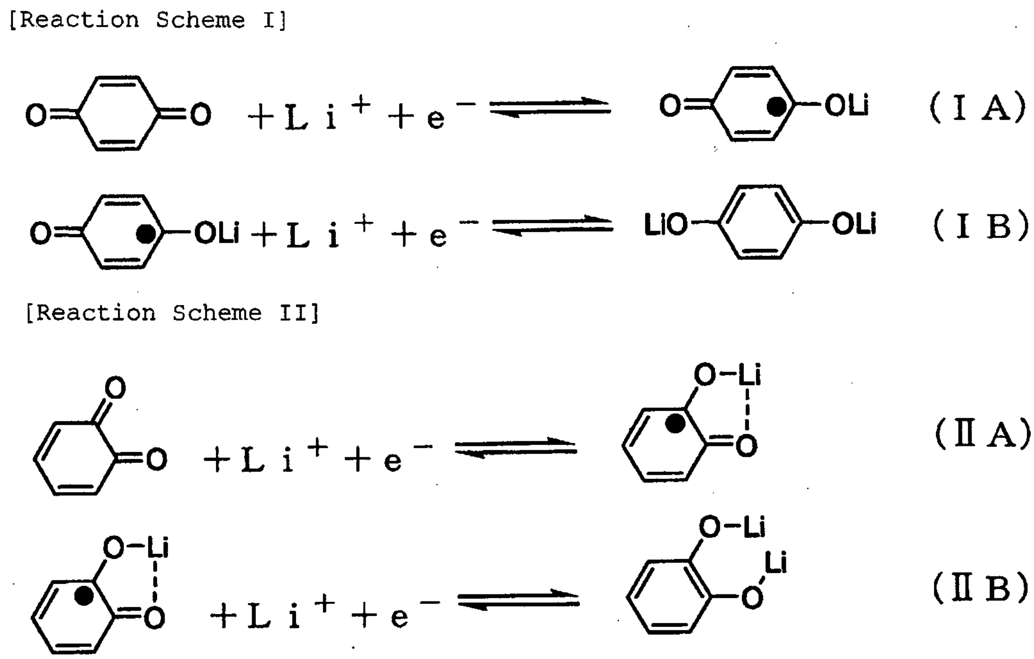
[Reaction Scheme I]
(I A)
(I B)
[Reaction Scheme II]
(II A)
(II B)

In the para-quinone compound, the two ketone groups are located away from each other, and have a localized electric charge distribution, so that the para-quinone compound has a large charge density and the difference in charge density from the lithium ions is large. Accordingly, the ketone groups and the lithium ions form a very strong, covalent-like bond during an oxidation reaction, thus creating an energetically stable state. For this reason, the lithium ions cannot be easily dissociated from the ketone groups during a reduction reaction. Accordingly, when a para-quinone compound is used as the electrode active material and lithium ions are used as a mobile carrier, the reaction reversibility tends to decrease. The stable state as mentioned here means a strongly bonded state in which lithium ions cannot be easily dissociated through the battery reaction, and does not mean the stability of the compound during the battery reaction.

Since the two ketone groups in the para-quinone compound are located away from each other, the reactions represented by schemes (IA) and (IB) each have a different energy level. Specifically, the potential (relative to lithium) in the first-step (one-electron) reaction in accordance with scheme (IA) is as high as 2 to 3 V, but the potential (relative to lithium) in the second-step (two-electron) reaction in accordance with scheme (IB) is as low as about 1.0 V. Since the potential range actually used in a non-aqueous lithium ion secondary battery is about 2 to 3 V (in the first step only), the actual capacity density is half thereof.

In the ortho-quinone compound, the two ketone groups are located adjacent to each other, and have a negative

electric charge distribution that is somewhat delocalized compared to that in the para-quinone compound. For this reason, the strength of the bond formed between the ketone groups and the lithium ions during an oxidation reaction is smaller compared to the bond of the para-quinone compound that is a covalent bond-like strong bond. In a para-quinone in which the ketone groups (having a negative charge) are localized, one ketone group is bonded to one lithium always on a one-to-one basis. In contrast, for the ortho-quinone compound, the two ketone sites are bonded to one lithium ion in the first-step (one-electron) reaction shown in scheme (IIA), and one lithium ion is bonded to each of the two ketone sites in the second-step (two-electron) reaction shown in scheme (IIB).

That is, the bond between the ketone groups and the lithium ions is not a one-to-one bond between a ketone group in which the negative charge is localized and a lithium ion, but is a two-to-two bond between two ketone groups in which the negative charge is delocalized and two lithium ions. Consequently, the bonding strength between the ketone groups and the lithium ions is decreased. Thus, the bonding strength between the lithium ions and the ketone sites is decreased in the ortho-quinone compound compared to that in the para-quinone compound, whereby the reversibility of the reaction becomes higher.

Since the two ketone groups are located adjacent to each other in the ortho-quinone compound, the reactions of schemes (IIA) and (IIB) have relatively similar energy levels. Specifically, the potential (relative to lithium) in the first-step (one-electron) reaction corresponding to scheme (IIA) and the potential (relative to lithium) in the second-step (two-electron) reaction corresponding to scheme (IIB) are similar to each other, and both are about 2 to 3 V.

Since the above-described redox reaction is possible, the ortho-quinone compound can be used as an electrode active material for a power storage device. Furthermore, since a two-electron reaction is possible, the compound can be used as an electrode active material having a high energy density.

In general, low-molecular-weight organic compounds tend to be dissolved in organic solvents. It is difficult to universally determine the solubility of organic compounds in organic solvents; in fact, various factors including, for example, the solubility, the solvation energy, and the intermolecular force interact with one other.

When a low-molecular-weight organic compound is used as an electrode active material, and an electrolyte containing an organic solvent is used, it is possible to inhibit the apparent dissolution by designing a cell configuration of a power storage device so as to decrease the amount of the electrolyte. Examples of specific methods include a method in which the apparent dissolution is inhibited by causing the electrode active material to be dissolved to the saturation solubility by decreasing the amount of the electrolyte, and inhibiting further dissolution.

However, this method cannot provide a fundamental solution since the electrode active material is present in the electrolyte, and there is the possibility that the electrode active material may migrate to the counter electrode, thus causing an internal short circuit.

In order to solve the fundamental problem that a low-molecular-weight organic compound tends to be dissolved in an electrolyte, it is necessary to control the solubility of the organic compound itself, and provide the organic compound itself with the property of being not easily dissolved in an electrolyte.

Herein, the state in which the molecule of the organic compound is dissolved in an electrolyte means a state in which the molecule of the organic compound is solvated with the electrolyte. This state occurs because the molecule of an organic compound is more stable when it is present in the solvated sate than when it is present as a molecule aggregate (in the non-dissolved state) in the electrolyte. If the electrode can retain the molecule of a solvated organic compound, then the dissolution of the organic compound into the electrolyte is inhibited. In practice, however, the molecule of the solvated organic compound migrates into the electrolyte, and the molecule of the organic compound is diffused in the electrolyte, so that the dissolution of the organic compound into the electrolyte proceeds.

Based on these findings, the inventors presumed that, in order to fundamentally solve the problem of the dissolution of the electrode active material in the electrolyte, (1) a molecule that cannot be easily solvated with an electrolyte or (2) a molecule that does not easily diffuse even if it is solvated with an electrolyte is effective as an electrode active material.

Therefore, the inventors further conducted extensive studies on organic compounds having the molecule (1) or (2) above and two or more ketone groups in the molecule.

As a result, the inventors succeeded in finding a specific organic compound in which a plurality of organic compounds having two or more ketone groups are covalently bonded via an organic compound containing no ketone group. The inventors also found that the aforementioned organic compound not only has low solubility in an electrolyte, but also exhibits excellent reaction reversibility, has a high capacity, and is hence useful as an electrode active material.

In other words, the electrode active material for a power storage device of the present invention (hereinafter, simply referred to as "the electrode active material of the present invention") contains an organic compound having, in the molecule, a plurality of sites that contribute to a redox reaction (electrode reaction sites) and a linker site that is disposed between the plurality of electrode reaction sites and that does not contribute to the redox reaction. Each of the plurality of electrode reaction sites independently contains two or more ketone groups, and the linker site does not contain any ketone group.

Incidentally, the energy density (mAh/g) of an electrode active material can be determined by the following

expression:

$$\text{Energy Density} = [(\text{Number of Reaction Electrons} \times 96500)/\text{Molecular Weight}] \times (1000/3600)$$

From the above expression, it can be seen that, in order to increase the energy density, it is necessary to increase the number of reaction electrons and decrease the molecular weight. However, when a conductive polymer compound such as polyaniline is used as a redox reaction site, the energy density is decreased because polymerization results in an increase in the molecular weight and a decrease in the number of reaction electrons. For this reason, it has been difficult to achieve both inhibition of dissolution in the electrolyte and an increase in the energy density by the above-described conventional method.

In contrast, in the case of the electrode active material of the present invention, the decrease in the number of reaction electrons due to the electronic repulsion between the plurality of electrode reaction sites is inhibited by the presence of the above-described linker site, so that the number of reaction electrons is large and the energy density is high. Furthermore, a multimer can be formed by causing the plurality of ketone sites to be bonded via a linker site. Accordingly, the dissolution of the electrode active material in the electrolyte can be inhibited compared to when a conventional low-molecular-weight organic compound is used. That is, according to the present invention, it is possible to simultaneously achieve an increase in the energy density and the inhibition of dissolution in the electrolyte.

Preferably, the above-described organic compound used as the electrode active material of the present invention is a multimer having a weight-average molecular weight of about 500 to 100000. Particularly, a significant effect can be obtained when the weight-average molecular weight is about 1500 or greater.

In order to significantly inhibit the dissolution of the organic compound serving as the electrode active material in the electrolyte, the linker site is formed by an aromatic compound. An aromatic compound has a planar molecular structure and a $\pi$-electron cloud of conjugated system in the molecule. This results in higher planarity of the molecule and an increased interaction force between molecules (intermolecular force). Due to the presence of the linker site in the molecule as a site that increases the interaction force between molecules and cannot be easily solvated with the electrolyte, the dissolution of the electrode active material in the electrolyte is inhibited, whereby it is possible to obtain an electrode active material that exhibits excellent redox reaction reversibility. By using this electrode active material, it is possible to obtain a power storage device having excellent charge/discharge cyde characteristics.

In general, a commonly used polymer material has a weight-average molecular weight of 10000 or greater. In contrast, the electrode active material of the present invention can achieve a sufficient insolubilizing effect when the weight-average molecular weight is about 1500 or greater, without the weight-average molecular weight being increased to 10000 or greater.

Furthermore, the organic compound used as the electrode active material of the present invention is lighter than inorganic oxides used as conventional electrode active materials, so that it is possible to reduce the weight of the power storage device.

From the foregoing, with the use of the electrode active material of the present invention, it is possible to obtain a power storage device having a high output, a high capacity, excellent cyde characteristics, and a high energy density. A power storage device having a high voltage on the order of 3.0 V can be obtained. The power storage device of the present invention can be suitably used as a power source of a variety of highly functional, small, light-weight electronic equipment (in particular, portable electronic equipment), transportation equipment, and so on.

Examples of the electrode active material of the present invention indude quinone derivatives and indanetrione derivatives containing a linker site.

That is, the electrode active material of the present invention is an electrode active material used for a power storage device that converts electron transfer associated with a redox reaction into electric energy. Furthermore, the electrode active material of the present invention is characterized by having a plurality of electrode reaction sites and a linker site. The electrode reaction sites are a residue of 9,10-phenanthrenequinone compound (A), and contribute to an electrochemical redox reaction. The linker site is disposed between the plurality of electrode reaction sites. In other words, one electrode reaction site is bonded to another electrode reaction site via a linker site.

In general formula (A), the specific groups represented by symbols $R_1$ to $R_8$, groups other than a hydrogen atom, a fluorine atom, and a cyano group are as follows. Examples of a $C_{1-4}$ alkyl group indude $C_{1-4}$ straight or branched chain alkyl groups such as a methyl group, an ethyl group, a propyl group, an isopropyl group, a butyl group, an isobutyl group, a sec-butyl group, and a tert-butyl group. Examples of a $C_{2-4}$ alkenyl group include straight or branched chain alkenyl groups having 1 to 3 double bonds, such as an allyl group, a 1-propenyl group, a 1-methyl-1-propenyl group, a 2-methyl-1-propenyl group, a 2-propenyl group, a 2-butenyl group, a 1-butenyl group, and a 3-butenyl group.

Examples of a $C_{3-6}$ cycloalkyl group include a cyclopropyl group, a cyclobutyl group, a cyclopentyl group, and a cyclohexyl group.

Examples of a $C_{3-6}$ cycloalkenyl group include a cyclopropenyl group, a cyclobutenyl group, a cyclopentenyl group, and a cyclohexenyl group.

Examples of an aryl group (aromatic compound) include monocyclic, polycyclic, or fused-ring aromatic hydrocarbon groups such as a phenyl group, a tolyl group, a mesityl group, a xylyl group, an indenyl group, a naphthyl group, a methylnaphthyl group, an anthryl group, a phenanthryl group, and a biphenyl group. Of these, a phenyl group, a naphthyl group, a biphenyl group, and the like are preferable.

Examples of an aralkyl group indude $C_{7-20}$, preferably $C_{7-10}$ monocyclic, polycyclic, or fused-ring aralkyl groups such as a benzyl group, a phenethyl group, a naphthylmethyl group, and a naphthylethyl group.

Further, the groups represented by symbols $R_1$ to $R_8$, in particular, a $C_{1-4}$ alkyl group, a $C_{2-4}$ alkenyl group, a $C_{3-6}$ cydoalkenyl group, an aryl group, and an aralkyl group optionally have one or two or more substituents. Such a substituent is a group containing at least one atom selected from the group consisting of a fluorine atom, a nitrogen atom, an oxygen atom, a sulfur atom, and a silicon atom.

Examples of a group containing a fluorine atom indude a fluorine atom itself, a fluoroalkyl group, a fluoroalkenyl group, and a fluoroalkoxy group. Examples of a substituent containing a nitrogen atom indude a nitro group, an amino group, an amide group, an imino group, and a cyano group. Examples of a substituent containing an oxygen atom indude a hydroxyl group, an oxo group, and a carboxyl group. Examples of a substituent containing a sulfur atom indude an alkylthio group, a sulfo group, a sulfino group, a sulfeno group, and a mercapto group. An example of a substituent containing a silicon atom is a silyl group.

From the viewpoint of increasing the voltage of the power storage device, the groups represented by symbols $R_1$ to $R_8$ are preferably highly electron-withdrawing substituents, more preferably an aryl group such as a phenyl group, a cyano group, a fluorine atom, and the like, particularly preferably a cyano group and a fluorine atom.

Specific examples of the electrode active material of the present invention indude a phenanthrenequinone-containing compound (1), a phenanthrenequinone-containing polymer (2), and a phenanthrenequinone-containing polymer (3).

The divalent residue represented by symbol $L_1$ in general formulae (1) and (2), and the trivalent residue represented by symbol $L_2$ in general formula (3) are each a divalent or trivalent residue of an aromatic compound.

As the aromatic compound, it is preferable to use at least one selected from the group consisting of a monocyclic aromatic compound, a fused-ring aromatic compound A in which at least two 6-membered aromatic rings are fused, a fused-ring aromatic compound B in which at least one 5-membered aromatic ring and at least one 6-membered aromatic ring are fused, and 5- and 6-membered heterocyclic aromatic compounds having a nitrogen atom, a sulfur atom, or an oxygen atom as a heteroatom.

Specific examples of the monocyclic aromatic compound indude benzene and benzene derivatives. Examples of the fused-ring aromatic compound A indude naphthalene, naphthalene derivatives, anthracene, and anthracene derivatives. Examples of the fused-ring aromatic compound B indude fluorene and fluorene derivatives. Examples of the 5- and 6-membered heterocyclic aromatic compounds having a nitrogen atom, an oxygen atom, or a sulfur atom as a heteroatom indude thiophene, pyridine, pyrrole, and furan. Of these, the 5-membered heterocyclic aromatic compound having a sulfur atom as a heteroatom is particularly preferable. Here, a benzene derivative is an aromatic compound in which various substituents are bonded to benzene. Other derivatives should be understood accordingly.

Further, the divalent residue represented by symbol $L_1$ and the trivalent residue represented by symbol $L_2$ optionally contain at least one of a sulfur atom and a nitrogen atom, and optionally have at least one substituent selected from the group consisting of a fluorine atom, a saturated aliphatic group, and an unsaturated aliphatic group.

Here, the phrase that the divalent residue and trivalent residue contain a sulfur atom and/or nitrogen atom specifically means that the divalent residue and trivalent residue have a substituent containing a sulfur atom and/or nitrogen atom. Examples of a substituent containing a sulfur atom indude an alkylthio group, a sulfo group, a sulfino group, a sulfeno group, and a mercapto group. Examples of a substituent containing a nitrogen atom indude a nitro group, an amino group, an amide group, an imino group, and a cyano group.

Examples of a saturated aliphatic group include an alkyl group and a cycloalkyl group. Examples of an alkyl group indude $C_{1-6}$ straight or branched chain alkyl groups such as a methyl group, an ethyl group, a propyl group, an isopropyl group, a butyl group, a tert-butyl group, a sec-butyl group, a pentyl group, and a hexyl group.

Examples of a cycloalkyl group include $C_{3-8}$ cycloalkyl groups such as a cyclopropyl group, a cyclobutyl group, a cyclopentyl group, a cyclohexyl group, a cycloheptyl group, and a cyclooctyl group.

Examples of an unsaturated aliphatic group include an alkenyl group, an alkynyl group, and a cycloalkenyl group. Examples of an alkenyl group include $C_{2-6}$ straight or branched chain alkenyl groups such as a vinyl group, an allyl group, a 2-butenyl group, a 3-butenyl group, a 1-methylallyl group, a 2-pentenyl group, and a 2-hexenyl group. Examples of a cycloalkenyl group include $C_{3-8}$ cycloalkenyl groups such as a cyclopropenyl group, a cyclobutenyl group, a cyclopentenyl group, a cyclohexenyl group, a cycloheptenyl group, and a cyclooctenyl group. Examples of an alkynyl group include $C_{2-4}$ straight or branched chain alkynyl groups such as an ethynyl group, a 1-propynyl group, a 2-propynyl group, a 1-methyl-2-propynyl group, a 1-butynyl group, a 2-butynyl group, and a 3-butynyl group.

A specific example of the univalent residue of the 9,10-phenanthrenequinone compound (A) represented by symbol $Q_1$ in the phenanthrenequinone-containing compound (1) is a univalent residue represented by:

[Chemical Formula 3]

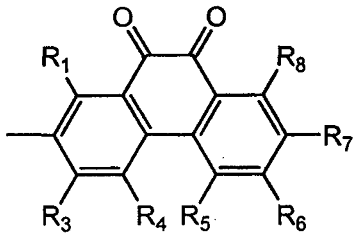

wherein $R_1$ and $R_3$ to $R_8$ are as defined above.
Specific examples of the divalent residue represented by $L_1$ indude those shown below.

[Chemical Formula 4]

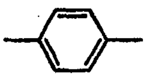 , 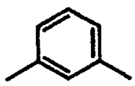 , 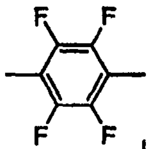 , 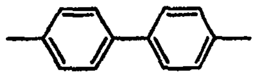 ,
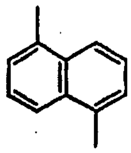 , 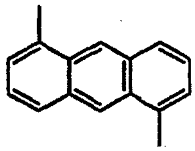 , 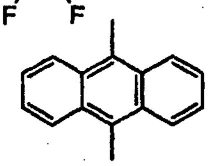 , 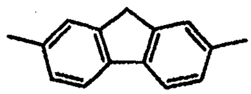 ,
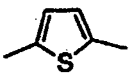 , 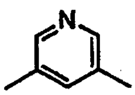 , 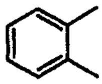 , 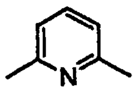

Further, specific examples of the phenanthrenequinone-containing compound (1) indude the compounds listed in Tables 1 and 2 below.

[Table 1]

| Compound name | Chemical structural formula |
|---|---|
| (1a) | 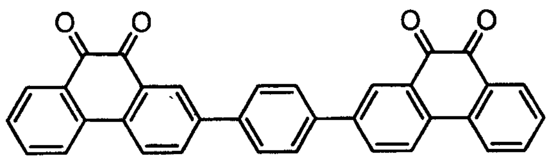 |
| (1b) | 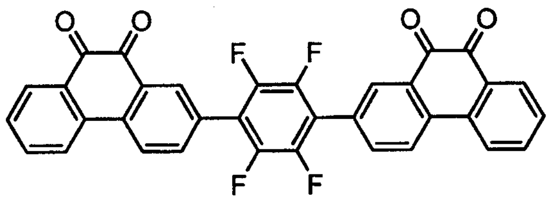 |

(continued)

| Compound name | Chemical structural formula |
|---|---|
| (1c) | 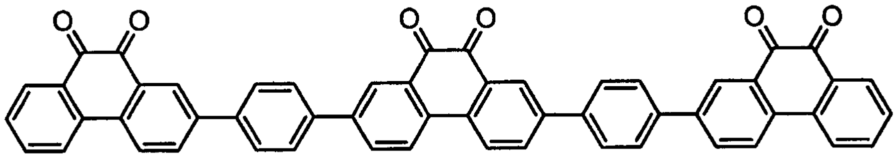 |
| (1c) | 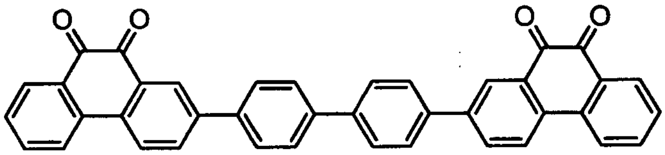 |
| (1e) | 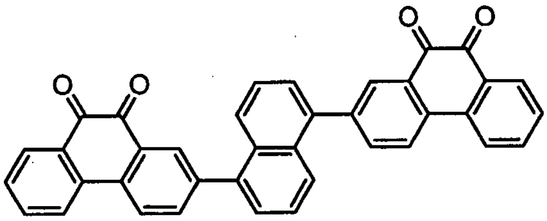 |
| (1f) | 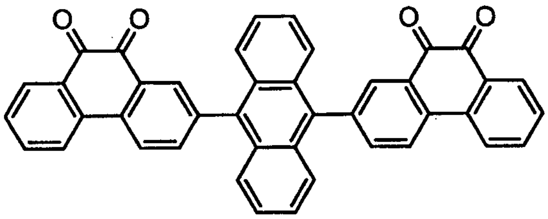 |

[Table 2]

| Compound name | Chemical structural formula |
|---|---|
| (1g) | 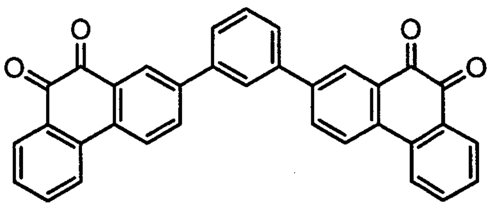 |
| (1h) | 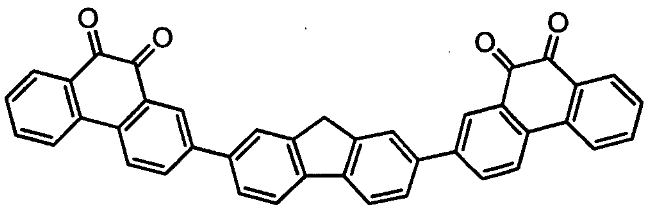 |
| (1i) | 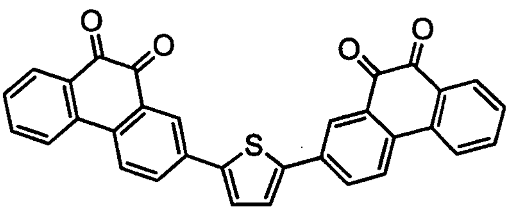 |

(continued)

| Compound name | Chemical structural formula |
|---|---|
| (1j) | 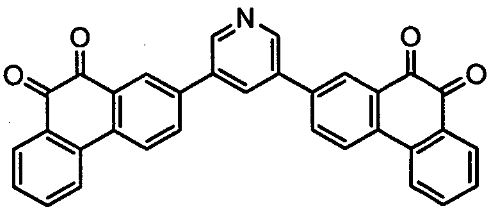 |
| (1k) | 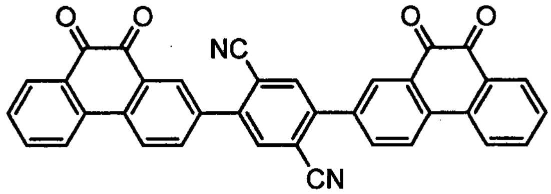 |

In the phenanthrenequinone-containing polymer (2), n $Q_2$s may be the same or different Examples of the divalent residue represented by $Q_2$ in the 9,10-phenanthrenequinone compound (A) include divalent residues represented by:

[Chemical Formula 5]

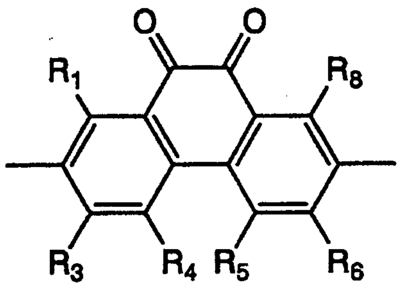
、
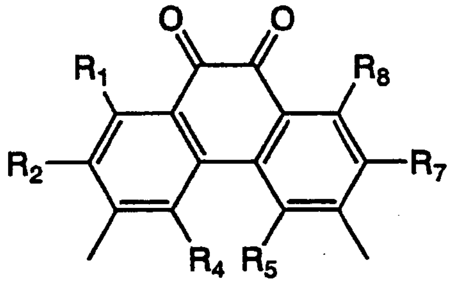

wherein $R_1$ to $R_8$ are as defined above.
Specific examples of the divalent residue represented by $L_1$ indude the same residues listed as the specific examples of the divalent residue represented by $L_1$ in the phenanthrenequinone-containing compound (1). Further, symbol n representing the number of monomer repeat units $-Q_2-L_1-$ in the phenanthrenequinone-containing polymer (2) is usually a natural number of 3 or greater, and preferably an integer of 3 to 300. When n is an integer of 6 or greater, a sufficient insolubilizing effect can be achieved.
Specific examples of the phenanthrenequinone-containing polymer (2) indude the compounds listed in Table 3 below.

[Table 3]

| Compound name | Chemical structural formula |
|---|---|
| (2a) | 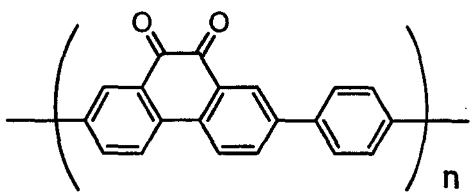 |

(continued)

| Compound name | Chemical structural formula |
|---|---|
| (2b) | 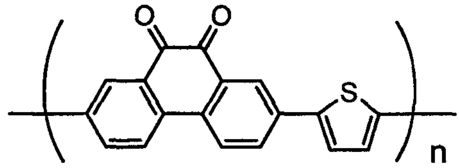 |
| (2c) | 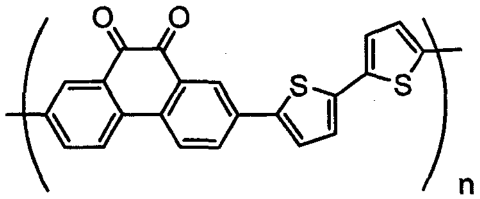 |
| (2d) | 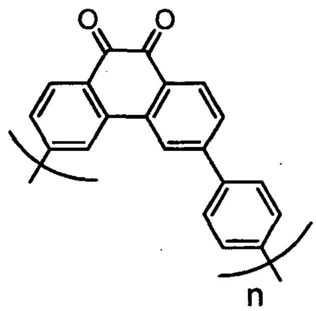 |
| (2e) | 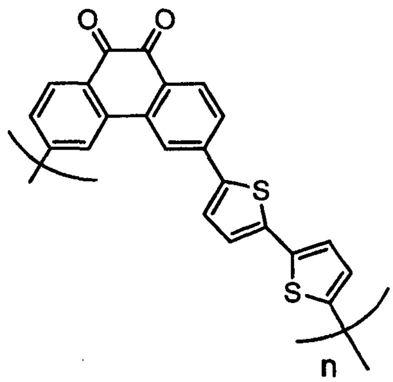 |

In the phenanthrenequinone-containing polymer (3), each of n $Q_1$s and $L_2$s may be the same or different. Examples of the univalent residue represented by $Q_1$ in the 9,10-phenanthrenequinone compound (A) indude the same residues listed as the specific examples of the univalent residue represented by symbol $Q_1$ in the 9,10-phenanthrenequinone compound (A) in the phenanthrenequinone-containing compound (1). Specific examples of the trivalent residue represented by symbol $L_2$ indude those shown below.

[Chemical Formula 6]

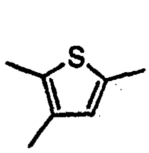 , 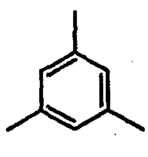 , 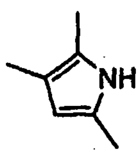 , 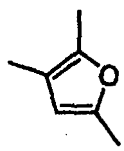 , 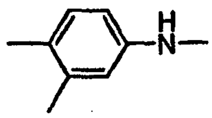

In the phenanthrenequinone-containing polymer (3), "n" representing the number of monomer repeat units -$L_2(Q_1)$- is usually an integer of 3 or greater, and preferably an integer of 3 to 300. When n is an integer of 6 or greater, a sufficient insolubilizing effect can be achieved.

Specific examples of the phenanthrenequinone-containing polymer (3) indude the compounds shown below:

[Chemical Formula 7]

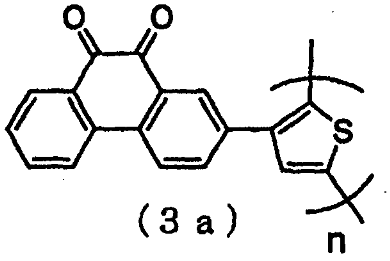
(3 a)
,
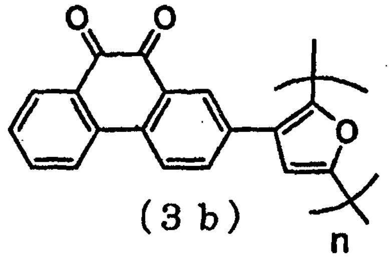
(3 b)
,
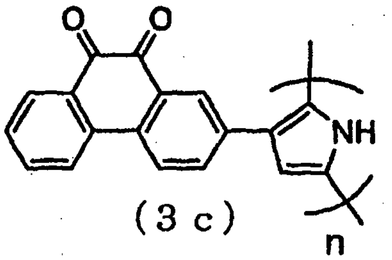
(3 c)
,
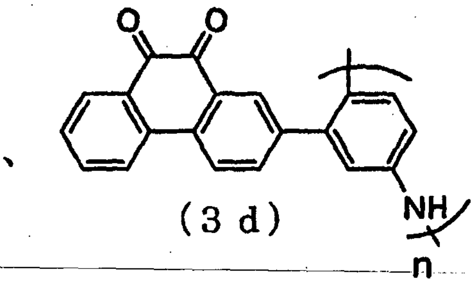
(3 d)

wherein n is as defined above.

The electrode active material of the present invention is synthesized, for example, in the following manner. First, a protecting group is introduced into the quinone sites, serving as the electrode reaction sites, of a quinone compound. Examples of the protecting group indude trimethylsilyl (TMS), triethylsilyl (TES), tert-butyldimethylsilyl (TBS or TBDMS), triisopropylsilyl (TIPS), and tert-butyldiphenylsilyl (TBDPS). Further, a boronic acid group is introduced into a site of the protecting group-introduced quinone compound that is to be bonded to a compound serving as a linker site.

Meanwhile, a halogen such as iodine is introduced into a site of the linker site compound that is to be bonded to the quinone compound. Then, the quinone compound having a protecting group and a boronic acid group is coupled to the halogen-substituted compound serving as a linker site in the presence of a palladium catalyst, and then the protecting group is eliminated. Thus, the electrode active material of the present invention is obtained.

There is also another method of synthesizing the electrode active material of the present invention. First, a compound constituting a linker site is substituted with iodine at a para position to give an iodide compound. Then, a compound constituting an electrode reaction site is substituted with a boronic acid group or the like to obtain an organic boron compound. The organic boron compound having a boronic acid group can be obtained, for example, by reacting the compound constituting an electrode reaction site and having iodine as a substituent with tert-butyllithium, 2-isopropyl-4,4,5-tetramethyl-[1,3,2]dioxaborolane, or the like.

Further, a cross-coupling of the iodide compound and the organic boron compound can give the electrode active material of the present invention. The cross-coupling is carried out, for example, in accordance with Suzuki-Miyaura cross-coupling, in the presence of a palladium catalyst.

As the method for synthesizing the electrode active material of the present invention, the latter method is preferable in that it has a fewer number of synthesizing steps, easily allows synthesis, and gives a high-purity compound as the synthesized material.

The synthesis reaction in each of the steps of the compound production process is performed in an inert atmosphere such as an argon atmosphere or in a nonoxidizing atmosphere. The target material obtained in each step can be easily isolated from the resultant final reaction mixture by performing, in combination, commonly used isolation and purification methods such as filtration, centrifugation, extraction, chromatography, concentration, recrystallization, and washing.

According to the present invention, depending on the synthesizing method, a mixture of a plurality of polymers having different numbers of repeat units n may be obtained upon synthesis of the phenanthrenequinone-containing

polymer (2) and the phenanthrenequinone-containing polymer (3). For such a mixture, an average number of repeat units, i.e., an average degree of polymerization can be determined in accordance with the proportions of the polymers having different numbers of repeat units contained. The average number of repeat units may be a decimal, rather than an integer, as with conventionally known polymer mixtures.

[Power Storage Device]

The power storage device of the present invention is capable of converting electron transfer associated with a redox reaction into electric energy, and indudes a positive electrode, a negative electrode, a separator disposed between the positive electrode and the negative electrode, and a non-aqueous electrolyte. The power storage device of the present invention is characterized in that at least one of the positive electrode and the negative electrode indudes the electrode active material of the present invention.

In other words, the power storage device of the present invention may have the same configuration as a conventional power storage device except that at least one of the positive electrode and the negative electrode contains the electrode active material of the present invention. For example, when the electrode active material of the present invention is used as one of the positive electrode and the negative electrode, an active material conventionally used for a power storage device may be used for the other.

The positive electrode includes, for example, a positive electrode current collector and a positive electrode active material layer. The positive electrode active material layer is formed on one surface or both surfaces in a thickness direction of the positive electrode current collector. The positive electrode is disposed such that the positive electrode active material layer is located on the separator side.

Any current collector commonly used in the field can be used as the positive electrode current collector, and it is possible to use, for example, a porous or nonporous sheet or film made of a metal material such as nickel, aluminum, gold, silver, copper, stainless steel, and aluminum alloy. As such a sheet or film, it is possible to use, for example, a metal foil, a mesh structure, and the like. Alternatively, the positive electrode active material layer may be formed after a carbon material such as carbon is applied to the surface of the positive electrode current collector. This can effectively reduce the resistance value, provide catalytic effect, or increase the bonding strength between the positive electrode active material layer and the positive electrode current collector. The increase of bonding strength seems to occur because the positive electrode active material layer is chemically or physically bonded to the positive electrode current collector due to the presence of the carbon material interposed between the positive electrode active material layer and the positive electrode current collector.

The positive electrode active material layer contains a positive electrode active material, and may contain, as necessary, an electron-conductive auxiliary agent, an ion-conductive auxiliary agent, a binder, and the like.

When the electrode active material of the present invention is used for the positive electrode, it is possible to use, as the negative electrode active material, carbon compounds such as carbon, graphitized carbon (graphite), and amorphous carbon, lithium metal, lithium-containing composite nitrides, lithium-containing titanium oxides, Si, Si oxides, and Sn, for example. Alternatively, a capacitor can be formed using activated carbon as the counter electrode. The electrode active material of the present invention is more preferably used for the positive electrode.

The electron-conductive auxiliary agent and the ion-conductive auxiliary agent are used, for example, in order to reduce the electrode resistance. As the electron-conductive auxiliary agent, those commonly used in the field may be used. Examples thereof indude carbon materials such as carbon black, graphite, and acetylene black, and conductive polymer compounds such as polyaniline, polypyrrole, and polythiophene. As the ion-conductive auxiliary agent as well, those commonly used in the field may be used. Examples thereof indude solid electrolytes such as polyethylene oxide, and gel electrolytes such as polymethyl methacrylate and polymethyl methacrylate.

The binder is used, for example, in order to improve the bonding property of the materials constituting the electrode. As the binder, those commonly used in the field may be used. Examples thereof indude polyvinylidene fluoride, a vinylidene fluoride-hexafluoropropylene copolymer, a vinylidene fluoride-tetrafluoroethylene copolymer, polytetrafluoroethylene, styrene-butadiene copolymer rubber, polypropylene, polyethylene, polyimide, and the like.

The negative electrode includes, for example, a negative electrode current collector and a negative electrode active material layer. The negative electrode active material layer is formed on one surface or both surfaces in a thickness direction of the negative electrode current collector. The negative electrode is disposed such that the negative electrode active material layer is located on the separator side.

As the negative electrode current collector, it is possible to use a porous or nonporous sheet or film made of a metal material such as nickel, copper, copper alloy, and stainless steel. As such a sheet or film, it is possible to use, for example, a metal foil, a mesh structure, and the like. Alternatively, the negative electrode active material layer may be formed after a carbon material is applied to the surface of the negative electrode current collector. This can effectively reduce the resistance value, provide catalytic effect, or increase the bonding strength between the negative electrode active material layer and the negative electrode current collector.

The negative electrode active material layer contains a negative electrode active material, and may contain, as necessary, an electron-conductive auxiliary agent, an ion-conductive auxiliary agent, a binder, a thickener, and the like. When the electrode active material of the present invention is used for the negative electrode, it is possible to use, for example, lithium-containing metal oxides such as $LCoO_2$, $LiNiO_2$, and $LiMn_2O_4$ as the positive electrode active material. As the electron-conductive auxiliary agent, the ion-conductive auxiliary agent, and the binder contained in the negative electrode active material layer, it is possible to use the same electron-conductive auxiliary agent, ion-conductive auxiliary agent, and binder as those contained in the positive electrode active material layer, respectively. Besides the binder contained in the positive electrode active material layer, rubbers such as acrylonitrile rubber, butadiene rubber, styrene-butadiene rubber, and an acrylic acid-modified product thereof can be used as the binder. As the thickener, it is possible to use, for example, carboxymethyl cellulose and the like.

As the separator, it is possible to use a porous sheet or film having a specific ion permeability, mechanical strength, insulating properties, and the like. As the separator, it is possible to use, for example, a microporous film, a woven fabric, or a nonwoven fabric. As the material for the separator, it is possible to use various resin materials, and polyolefins such as polyethylene and polypropylene are preferable from the viewpoint of durability, shut-down function, and safety of the battery. Here, the shut-down function is a function by which through-holes are blocked when the amount of heat generation is excessively increased in a battery, thus inhibiting ion permeation and interrupting the battery reaction.

As the electrolyte, it is possible to use, for example, a liquid electrolyte, a gel electrolyte, or a solid electrolyte. Of these, a gel electrolyte is preferable.

The liquid electrolyte is composed of, for example, an organic solvent and a supporting salt dissolved in the solvent. As the supporting salt, it is possible to use, for example, supporting salts used for lithium ion batteries and non-aqueous electric double layer capacitors. The supporting salt includes a cation and an anion.

Examples of the cation indude cations of alkali metals such as lithium, sodium, and potassium, cations of alkaline-earth metals such as magnesium, and quaternary ammonium cations such as tetraethylammonium and 1,3-ethyl methyl imidazolium. These cations may be used singly or in combination of two or more. Examples of the anion indude halide anions, perchloric acid anions, trifluoromethanesulfonic add anions, tetrafluoroborate anions, trifluorophosphate hexafluoride anions, trifluoromethanesulfonic add anions, bis(trifluoromethanesulfonyl)imide anions, and bis(perfluoroethylsulfonyl)imide anions. These anions may be used singly or in combination of two or more.

When the supporting salt itself is liquid, the supporting salt and the organic solvent may be mixed together, or they need not be mixed together. When the supporting salt is solid, it is preferable to dissolve the supporting salt in the organic solvent for use.

As the organic solvent, for example, organic solvents used for lithium ion batteries and non-aqueous electric double layer capacitors may be used. It is possible to use, for example, ethylene carbonate, propylene carbonate, dimethyl carbonate, diethyl carbonate, methyl ethyl carbonate, $\gamma$-butyl lactone, tetrahydrofuran, dioxolane, sulfolane, dimethylformamide, and acetonitrile. These organic solvents may be used singly or in combination of two or more.

Examples of the solid electrolyte include a $Li_2S$-$SiS_2$-lithium compound (wherein the lithium compound is at least one selected from the group consisting of $Li_3PO_4$, LiI, and $Li_4SiO_4$), $Li_2S$-$P_2O_5$, $Li_2S$-$B_2S_5$, $Li_2S$-$P_2S_5$-$GeS_2$, sodium/alumina ($Al_2O_3$), an amorphous polyether having a low phase transition temperature (Tg), an amorphous vinylidene fluoride copolymer, a blend of different polymers, polyethylene oxide, and the like.

The gel electrolyte is composed of, for example, a resin material serving as a gelling agent, an organic solvent, and a supporting salt. Examples of the resin material indude polyacrylonitrile, a copolymer of ethylene and acrylonitrile, and a cross-linked polymer thereof. As the organic solvent, it is possible to use, for example, low-molecular-weight solvents such as ethylene carbonate and propylene carbonate. As the supporting salt, those described above may be used. The solid electrolyte and the gel electrolyte can also serve as the separator.

The power storage device of the present invention can be, for example, a primary battery, a secondary battery, a capacitor, an electrolytic capacitor, a sensor, or an eledrochromic element.

The power storage device of the present invention can be suitably used, for example, as a power source of transportation equipment, electronic equipment, and the like, as a power storage device for leveling power generation of thermal power generation, wind power generation, a fuel cell power generation, and the like, as an emergency power storage system for general households and apartment houses, as a power source of a late-night power storage system and the like, and as a uninterruptible power supply.

[Electronic Equipment]

The electronic equipment of the present invention indudes the power storage device of the present invention as a power source. That is, the electronic equipment of the present invention can have the same configuration as conventional electronic equipment except that it includes the power storage device of the present invention as the power source. Examples of the electronic equipment of the present invention indude portable electronic equipment such as a mobile phone, a mobile device, a personal digital assistant (PDA), a notebook personal computer, a video camera, and

a game console, an electric tool, a vacuum cleaner, and a robot Of these, portable electronic equipment is preferable.

FIG 1 is a perspective view schematically showing a configuration of a mobile phone 30 that is one embodiment of the present invention. The mobile phone 30 indudes a casing 40. The casing 40 is made up of two foldable casing portions. A display portion 41 is provided on the peripheral surface of one of the casing portions, and an input portion 42 is provided on the peripheral surface of the other casing portion. The display portion 41 is formed, for example, by a liquid crystal panel. Additionally, a power supply portion 43 and an electronic control circuit portion (not shown) are provided inside the casing portion provided with the input portion 42.

A power storage device is mounted on the power supply portion 43. As the power storage device, it is possible to use only the power storage device of the present invention, or use the power storage device of the present invention in combination with a conventional power storage device. Examples of the conventional power storage device indude a lithium ion secondary battery, a nickel-metal hydride storage battery, a capacitor, a fuel cell, and the like.

The electronic control circuit portion controls, for example, the state of charge (SOC) of the power storage device mounted on the power supply portion 43, the voltage of the power storage device during charging, the display of the liquid crystal panel, transmission and reception, and the like.

The power storage device of the present invention can be small and thin. Accordingly, the space required for installation of the power storage device can be small, enabling the size and the thickness of the mobile phone to be small. The power storage device of the present invention is capable of fast charging, and thus can reduce the charging time. The power storage device of the present invention has a high output and high a high capacity, and therefore can provide the mobile phone with enhanced performance such as an extended talk time.

FIG 2 is a perspective view schematically showing a configuration of a notebook personal computer 50 (hereinafter, referred to as a "PC 50") that is one embodiment of the present invention. The PC 50 indudes a casing 60. The casing 60 is made up of two foldable casing portions. A display portion 61 is provided on the peripheral surface of one of the casing portions, and a key operation portion 62 is provided on the peripheral surface of the other casing portion. The display portion 61 is formed, for example, by a liquid crystal panel. A power supply portion 63 and other components that are not shown, such as an electronic control circuit portion and a cooling fan, are provided inside of the casing portion provided with the key operation portion 62.

The electronic control circuit portion indudes a CPU, a memory, a timer, etc., and controls various operations performed in the PC 50.

The power storage device of the present invention is mounted on the power supply portion 65. On the power supply portion 65, it is possible to mount only the power storage device of the present invention, or mount the power storage device of the present invention in combination with a conventional power storage device. Examples of the conventional power storage device indude a lithium ion battery, a nickel-metal hydride storage battery, a capacitor, a fuel cell, and the like.

Since the power storage device of the present invention can be small and thin, the space required for installation of the power storage device can be small, enabling the size and the thickness of the notebook personal computer to be small. The power storage device of the present invention is capable of fast charging, and thus can reduce the charging time. The power storage device of the present invention has a high output and high a high capacity, thereby enabling, for example, the notebook personal computer to be used for a long period and to start quickly.

The transportation equipment of the present invention indudes the power storage device of the present invention as a main power source or as an auxiliary power source. That is, the transportation equipment of the present invention can have the same configuration as conventional transportation equipment except that it includes the power storage device of the present invention as a main power source or as an auxiliary power source. Examples of the transportation equipment of the present invention include vehicles equipped with a secondary battery, such as an electric vehicle, a hybrid electric vehicle, a fuel cell vehicle, and a plug-in HEV

FIG 3 is a block diagram schematically showing a configuration of a hybrid electric vehide 70 that is one embodiment of the present invention. The hybrid electric vehide 70 includes an engine 80, a plurality of motors 81, 82, and 83, a plurality of inverters 84, 85, and 86, a power supply portion 87, a controller 88, a hydraulic apparatus 89, a dutch 90, a continuously variable transmission (CVT) 91, and a reduction gear 92.

The motor 81 is a motor for starting the engine 80 or assisting the vehide when the vehide starts to move, and also functions as a generator. The motor 82 is a vehide drive motor. The motor 83 is a steering (power steering) motor. The inverters 84, 85, and 86 are connected to the motors 81, 82, and 83, respectively, and transmit an output from the motors 81, 82, and 83.

The power supply portion 87 supplies electric power for rotation to the motors 81, 82, and 83. The power storage device of the present invention is mounted on the power supply portion 87. For the power supply portion 87, it is possible to use only the power storage device of the present invention, or use the power storage device of the present invention in combination with a conventional power storage device. Examples of the conventional power storage device include a lithium ion battery, a nickel-metal hydride storage battery, a capacitor, a fuel cell, and the like.

The controller 88 controls the entire system. The hydraulic apparatus 89 is connected to the motor 83.

In the hybrid electric vehide 70, first, discharging of the power supply portion 87 (supplying electric power) causes the motor 81 to be driven to start the engine 80 or assist the vehide to start, and the motor 83 connected to the hydraulic apparatus 89 is driven rapidly. Charging of the power storage device mounted on the power supply portion 87 is performed by converting the driving force of the engine 80 into electricity by using the motor 81 as a generator.

Since the power storage device of the present invention can be small and thin, the weight of transportation equipment such as a vehicle can be small. The space required for installation of the power storage device can also be small, whereby it is possible to secure a larger space for cargo storage and passenger seats. The power storage device of the present invention is capable of fast charging-discharging and has a high output and a high capacity, and therefore can support various driving modes and contribute to an increase in the fuel efficiency of the vehicle.

Examples

Hereinafter, examples of the present invention will be described in detail, but the invention is not limited to these examples.

Example 1

In accordance with the following reaction scheme, the phenanthrenequinone-containing compound (1 a) (substance name: 1,4-(9,10-phenanthraquinone)-benzene) shown in Table 1 was synthesized.

[Reaction Scheme]

[Chemical Formula 8]

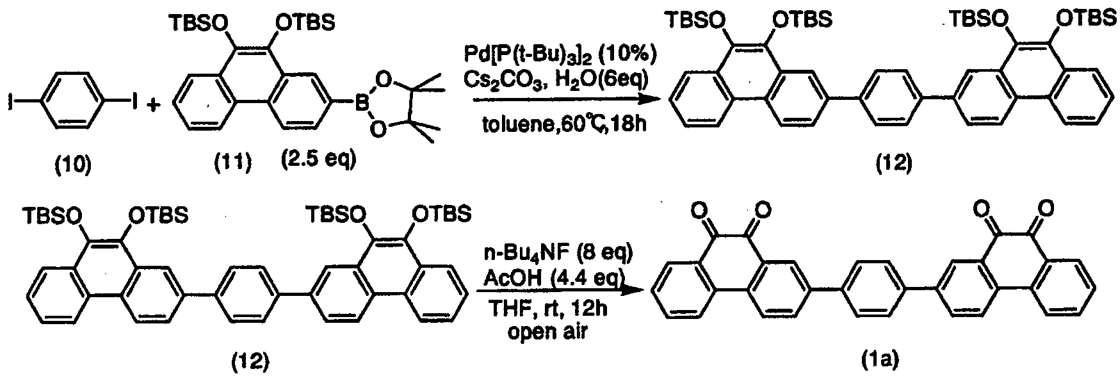


(10) (11) (2.5 eq) (12)

(12) (1a)

(1) Synthesis of 4-bis(9,10-bis(t-butyldimethylsiloxy)phenanthrene-2-yl)-benzene (12)

To a dried Schlenk flask were introduced 1,4-diiodobenzene (10) (0.3 mol, 99.5 mg), a boronic acid ester compound (11) (0.78 mmol, 441.3 mg), $Pd[P(tert\text{-}Bu)_3]_2$ (0.03 mmol, 15.2 mg), and 585.8 mg (1.8 mmol) of cesium carbonate, and after further adding thereto 5 ml of dry toluene and 32 $\mu$l (1.8 mmol) of water, the mixture was heated to 60°C and stirred for 24 hours under an argon atmosphere.

The reacted solution was cooled to room temperature, and thereafter filtrated with a short column (eluent: chloroform) to remove the catalyst and the inorganic salt from the solution. The resultant filtrate was washed with water, and the organic layer was dried over sodium sulfate, followed by filtration to remove the desiccant. The solvent was removed by an evaporator to give a crude product. A compound (12) (174.2 mg, yield 61%) as a precursor of the phenanthrenequinone-containing compound (1a) was isolated as white solids from the crude product by gel permeation chromatography (GPC).

That is, a protecting group was introduced into the quinone sites (phenanthraquinone) to give 4-bis(9,10-bis(t butyldimethylsiloxy)phenanthrene-2-yl)-benzene (12) as a precursor of the phenanthrenequinone-containing compound (1 a). The structure of the resultant compound was identified by $H^1$-NMR measurement, $C^{13}$-NMR measurement, and Mass spectroscopy measurement.

The chemical shift (ppm) for the $H^1$-NMR spectrum (400 MHz, $CDCl_3$) was as follows: 0.13 (s, 12H), 0.16 (s, 12H), 1.18 (s, 18H), 1.19 (s, 18H), 7.55 to 7.62 (m, 4H), 7.90 (dd, J = 8.8,2.0 Hz, 2H), 7.92 (s, 4H), 8.21 to 8.26 (m, 2H), 8.54 (d, J = 1.6 Hz, 2H), 8.62 to 8.66 (m, 2H), and 8.70 (d, J = 2.0 Hz, 2H).

The chemical shift (ppm) for the $C^{13}$-NMR spectrum (100 MHz, $CDCl_3$) was as follows: -3.2, -3.1, 18.9, 19.0,

26.7, 26.8, 121.0, 122.3, 122.99, 123.03, 123.7, 124.9, 125.9, 126.8, 127.4, 127.6, 130.3, 130.6, 137.4, 137.7, 137.9, and 140.0.

As for the molecular weight, an experimental value: 950.4995 was obtained compared to the theoretical value for $C_{58}H_{78}O_4Si_4$: 950.4977.

From the above-presented results, the compound was identified as a precursor of the phenanthrenequinone-containing compound (1a).

(2) Synthesis of Phenanthrenequinone-Containing Compound (1a)

The protecting group was eliminated from the precursor (12) in the following manner to give the target phenanthrenequinone-containing compound (1a). To a glass container in which the precursor (12) (0.09 mmol, 84.6 mg) had been introduced were added 20 ml of tetrahydrofuran (hereinafter, referred to as "THF") and 24 μl (0.42 mmol) of acetic acid. Subsequently, 0.8 ml (0.8 mmol) of a THF solution containing a 1.0 mol/L n-$Bu_4NF$ was added thereto, and the mixture was stirred for 12 hours at room temperature in air.

After completion of stirring, a red precipitate deposited in the reaction mixture was collected by centrifugal separation. The collected precipitate was washed with THF, dried under reduced pressure to give red solids of the phenanthrenequinone-containing compound (1a) (42.2 mg, yield 97%).

Example 2

In accordance with the following reaction scheme, the phenanthrenequinone-containing compound (1 b) (substance name: 1,4-(9,10-(phenanthraquinone)-2,3,5,6-fluorobenzene)-benzene) shown in Table 1 was synthesized.
[Reaction Scheme]

[Chemical Formula 9]

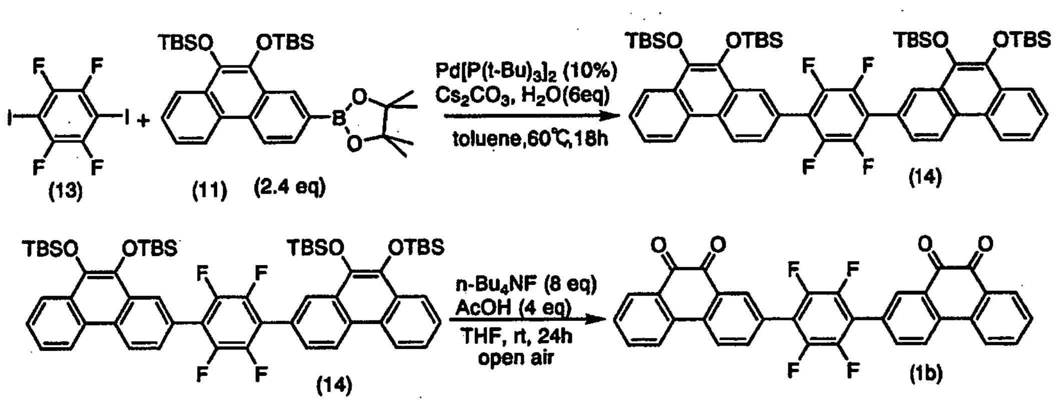


To a dried Schlenk flask were introduced 1,4-diiodotetafluorobenzene (13) (0.25 mol, 101 mg), a boronic acid ester compound (11) (0.73 mmol, 415 mg), $Pd[P(t\text{-}Bu)_3]_2$ (0.05 mmol, 27.9 mg), and cesium carbonate (3 mmol, 977 mg), and after further adding thereto 5 ml of dry toluene and 24 μl (1.3 mmol) of water, the mixture was heated to 60°C and stirred for 24 hours under an argon atmosphere.

The reacted solution was cooled to room temperature, and thereafter filtrated with a short column (eluent: chloroform) to remove the catalyst and the inorganic salt from the solution. The filtrate was washed with water, and the organic layer was dried over sodium sulfate, followed by filtration to remove the desiccant. The solvent was removed by an evaporator to give a crude product. A precursor (14) (21.8 mg, yield 9%) of the phenanthrenequinone-containing compound (1 b) was isolated as white solids from the crude product by gel permeation chromatography (GPC).

That is, a protecting group was introduced into the quinone sites (phenanthraquinone) to give 4-bis(9,10-bis(t-butyldimethylsiloxy)phenanthrene-2-yl)-tetrafluorobenzene (14) as a precursor of the phenanthrenequinone-containing compound (1 b). The structure of the resultant compound was identified by $H^1$-NMR measurement, $C^{13}$-NMR measurement, and Mass spectroscopy measurement.

The chemical shift (ppm) for the $H^1$-NMR spectrum (400 MHz, $CDC_3$) was as follows: 0.12 (s, 12H), 0.16 (s, 12H), 1.18 (s, 36H), 7.58 to 7.65 (m, 4H), 7.73 (d, J = 8.8 Hz, 2H), 825 (dm, J = 7.6 Hz, 2H), 8.44 (d, J = 12 Hz, 2H), 8.65 (dm, J = 8.0 Hz, 2H), 8.75 (d, J = 8.8 Hz, 2H).

The chemical shift for the $C^{13}$-NMR spectrum (100 MHz) was as follows: -3.3, -3.2, 18.91, 18.93, 26.6, 26.7, 122.5, 122.7, 123.0, 124.98, 125.03, 125.1, 126.2, 126.4, 127.2, 127.8, 137.2, 138.0.

As for the molecular weight, an experimental value: 1022.4600 was obtained compared to the theoretical value for $C_{58}H_{74}O_4F_4Si_4$:1022.4600. From the above-presented results, the compound was identified as the precursor (14) of the phenanthrenequinone-containing compound (1b).

(2) Synthesis of Phenanthrenequinone-Containing Compound (1 b)

The protecting group was eliminated from the precursor (14) in the following manner to give the target phenanthrenequinone-containing compound (1b). To a sample tube in which the precursor (14) (0.02 mmol, 19.5 mg) had been introduced were added 1.6 ml of THF and 5 μl (0.08 mmol) of acetic acid. Subsequently, 0.16 ml (0.16 mmol) of a THF solution containing a 1.0 mol/L n-$Bu_4$NF was added thereto, and the mixture was stirred for 12 hours at room temperature in air.

After completion of stirring, a red precipitate deposited in the reaction mixture was collected by centrifugal separation. The collected precipitate was washed with THF, dried under reduced pressure to give red solids of the phenanthrenequinone-containing compound (1b) (8.0 mg, yield 75%).

Example 3

In accordance with the following reaction scheme, the phenanthrenequinone-containing compound (1d) (substance name: 1,4-(9,10-phenanthraquinone)-4,4-biphenyl) shown in Table 1 was synthesized.
[Reaction Scheme]

[Chemical Formula 10]

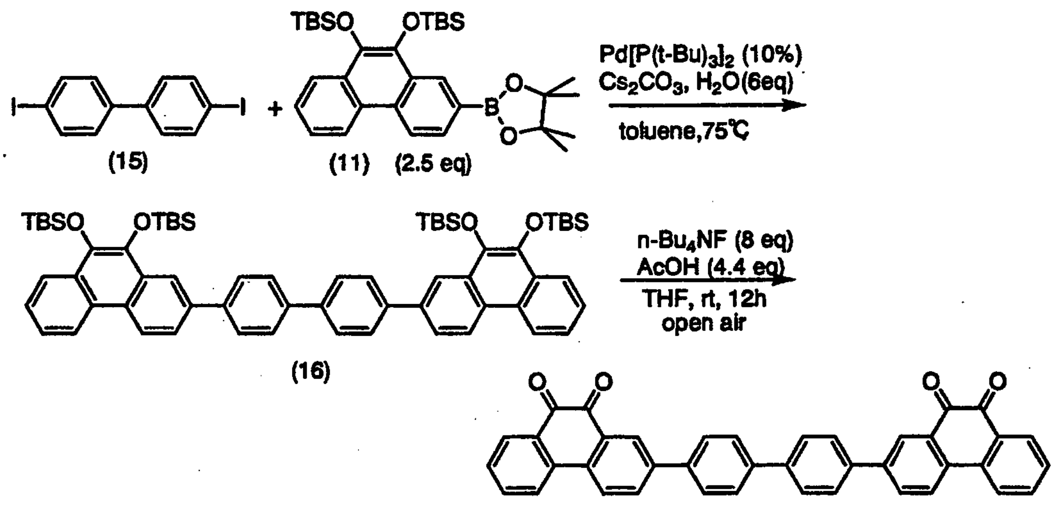


(1d)

(1) Synthesis of 1,4-bis(9,10-bis(t-butyldimethylsiloxy)phenanthrene-2-yl)-biphenyl (16)

To a dried Schlenk flask were introduced 1,4-diiodobiphenyl (15) (02 mol, 81.4 mg), a boronic acid ester compound (11) (0.5 mmol, 282 mg), $Pd[P(t\text{-}Bu)_3]_2$ (0.02 mmol, 102 mg), and 391 mg (12 mmol) of cesium carbonate, and after further adding thereto 4 ml of dry toluene and 22 μl (1.2 mmol) of water, the mixture was heated to 75°C and stirred for 21 hours under an argon atmosphere.

The reacted solution was cooled to room temperature, and thereafter filtrated with a short column (eluent chloroform) to remove the catalyst and the inorganic salt from the solution. The resultant filtrate was washed with water, and the organic layer was dried over sodium sulfate, followed by filtration to remove the desiccant The solvent was removed by an evaporator to give a crude product. A precursor (16) (55.6 mg, yield 27%) of the phenanthrenequinone-containing compound (1d) was isolated as white solids from the crude product by gel permeation chromatography (GPC).

That is, a protecting group was introduced into the quinone sites (phenanthraquinone) to give 1,4-bis(9,10-bis(t-butyldimethylsiloxy)phenanthrene-2-yl)-biphenyl (16) as a precursor of the phenanthrenequinone-containing compound (1d). The structure of the resultant compound was identified by $H^1$-NMR measurement, $C^{13}$-NMR measurement, and Mass spectroscopy measurement

The chemical shift (ppm) for the $H^1$-NMR spectrum (400 MHz, $CDCl_3$) was as follows: 0.13 (s, 12H), 0.16 (s, 12H), 1.18 (s, 18H), 1.21 (s, 18H), 7.55 to 7.62 (m, 4H), 7.82 to 7.86 (m, 4H), 7.86 to 7.92 (m, 4H), 820 to 825 (m, 2H), 8.53 (d, J = 2.0 Hz, 2H), 8.64 (dm, J = 8.8 Hz, 2M, 8.69 (d, J = 8.8 Hz, 2H).

The chemical shift (ppm) for the $C^{13}$-NMR spectrum (100 MHz) was as follows: -3.2, 3.1, 18.9, 19.0, 26.67, 26.74, 120.9, 122.3, 122.98, 123.04, 123.8, 124.9, 125.9, 126.8, 127.3, 127.4, 127.6, 130.3, 130.5, 137.4, 137.7, 137.9, 139.4, 140.0.

As for the molecular weight, an experimental value: 1026.5297 was obtained compared to the theoretical value for $C_{64}H_{82}O_4Si_4$: 1026.5290.

From the above-presented results, the compound was identified as the precursor (16) of the phenanthrenequinone-containing compound (1e).

(2) Synthesis of Phenanthrenequinone-Containing Compound (1d)

The protecting group was eliminated from the precursor (16) in the following manner to give the target phenanthrenequinone-containing compound (1d). The precursor (16) (0.05 mmol, 52.6 mg) was introduced to a sample tube, and 4 ml of THF and 12 μL (02 mmol) of acetic acid were added thereto. Subsequently, 0.4 ml (0.4 mmol) of a THF solution containing a 1.0 mol/L n-$Bu_4$NF was added thereto, and the mixture was stirred for 24 hours at room temperature in air.

After completion of stirring, a red precipitate deposited in the reaction mixture was collected by centrifugal separation. The collected precipitate was washed with THF, dried under reduced pressure to give red so solids of the phenanthrenequinone-containing compound (1d) (32 mg, yield 60%).

Example 4

In accordance with the following reaction scheme, 2-iodo-9,10-phenanthrenequinone (17) and thiophene-2,5-diboronic acid (18) were subjected to a Suzuki-Miyaura coupling reaction to synthesize the phenanthrenequinone-containing compound (1i) (substance name: 2,2'-(thiophene-2,5-diyl)diphenanthrene-9,10-dione) shown in Table 2.

[Reaction Scheme]

[Chemical Formula 11]

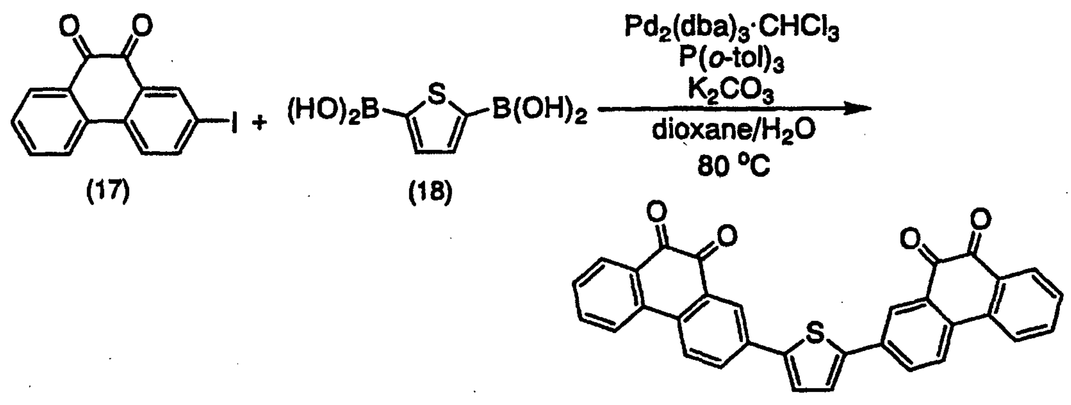


(17) (18)

(1i)

The 2-iodo-9,10-phenanthrenequinone (17) (838 mg, 2.51 mmol) and the thiophene-2,5-diboronic acid (18) (181 mg, 1.05 mmol) were dissolved in 13 ml of dioxane. To the resultant solution were added $Pd_2(dba)_3 \cdot CHCl_3$(67 mg, 0.065 mmol), 41 mg (0.135 mmol) of tris(o-tolyl)phosphine, 435 mg (3.15 mmol) of potassium carbonate, and 1.3 ml of

water. The mixture was heated overnight at 80°C under an argon atmosphere. After completion of the reaction, the reaction mixture was cooled to room temperature, and was then filtrated. The resultant solids were washed with a solvent mixture containing hexane and ethyl acetate, and chloroform. After further purification by silica gel chromatography, 267 mg (51%) of the phenanthrenequinone-containing compound (1i) was obtained as liver brown solids. IR (solid): 1671, 1592, 1447, 1283 $cm^{-1}$

Example 5

In accordance with the following reaction scheme, 2,7-diiodo-9.10-phenanthrenequinone (19) and benzene-1,4-diboronic acid (20) were subjected to a Suzuki-Miyaura coupling reaction to synthesize the phenanthrenequinone-containing polymer (2a) (substance name: poly[(9,10-phenanthrenequinone-2,7-diyl)-co-1,4-phenylene]) shown in Table 3.
[Reaction Scheme]
[Chemical Formula 12]

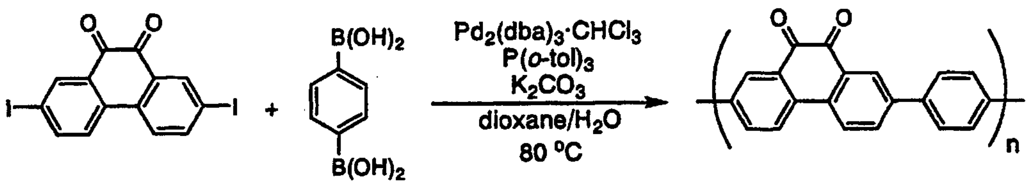


(19) (20) (2a)

The 2,7-diiodo-9,10-phenanthrenequinone (19) (549 mg, 1.5 mmol) and the benzene-1,4-diboronic acid (20) (249 mg, 1.5 mmol) were dissolved in 8.0 ml of dioxane. To the resultant solution were added $Pd_2(dba)_3{\cdot}CHCl_3$ (47 mg, 0.045 mmol), 28 mg (0.090 mmol) of tris(o-tolyl)phosphine, 621 mg (4.5 mmol) of potassium carbonate, and 1.0 ml of water. The mixture was heated overnight at 80°C under an argon atmosphere. After completion of the reaction, the reaction mixture was cooled to room temperature, and was then filtrated. The resultant solids were washed with a solvent mixture containing hexane and ethyl acetate, and chloroform. After vacuum drying, 904 mg (> 99%) of the phenanthrenequinone-containing compound (2a) was obtained as liver brown solids. The resultant polymer had a weight-average molecular weight of 1700 and a number-average molecular weight of 1400. The average degree of polymerization n calculated based on the weight-average molecular weight was about 6. IR (solid): 1671, 1596, 1468, 1397, 1287 $cm^{-1}$

Example 6

In accordance with the following reaction scheme, 3,6-dibromo-9,10-phenanthrertequinone (21) and benzene-1,4-diboronic acid (20) were subjected to a Suzuki-Miyaura coupling reaction to synthesize the phenanthrenequinone-containing polymer (2d) (substance name: poly[(9,10-phenanthrenequinone-3,6-diyl)-co-1,4-phenylene]) shown in Table 3.
[Reaction Scheme]
[Chemical Formula 13]

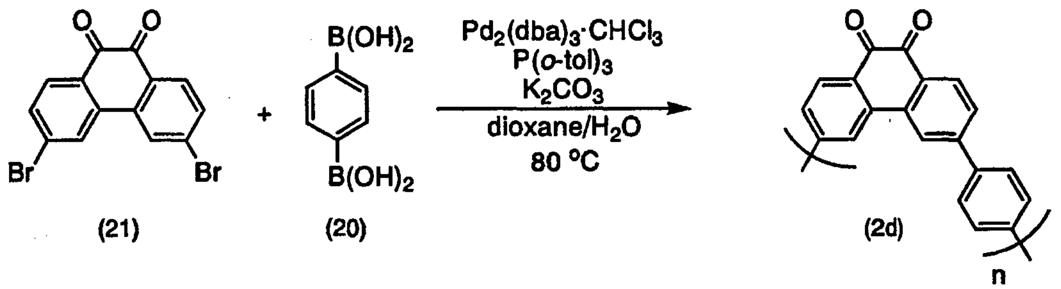


(21) (20) (2d)

The 3,6-dibromo-9,10-phenanthrenequinone (21) (549 mg, 1.5 mmol) and the benzene-1,4-diboronic add (20) (249 mg, 1.5 mmol) were dissolved in 8.0 ml of dioxane. To the resultant solution were added $Pd_2(dba)_3 \cdot CHCl_3$ (47 mg, 0.045 mmol), 28 mg (0.090 mmol) of tris(o-tolyl)phosphine, 621 mg (4.5 mmol) of potassium carbonate, and 1.0 ml of water. The mixture was heated overnight at 80°C under an argon atmosphere. After completion of the reaction, the reaction mixture was cooled to room temperature, and was then filtrated. The resultant solids were washed with water and ethyl acetate and further with chloroform. After vacuum drying, 403 mg (95%) of the phenanthrenequinone-containing polymer (2d) was obtained as dark red solids. The resultant polymer had a weight-average molecular weight of 5700 and a number-average molecular weight of 2800. The average degree of polymerization n calculated based on the weight-average molecular weight was about 20. IR (solid): 1669, 1594, 1395, 1312, 1295, 1235 $cm^{-1}$.

Example 7

In accordance with the following reaction scheme, 2,7-diiodo-9,10-phenanthrenequinone (19) and thiophene-2,5-diboronic acid (18) were subjected to a Suzuki-Miyaura coupling reaction to synthesize the phenanthrenequinone-containing polymer (2b) (substance name: poly[(9,10-phenanthrenequinone-2,7-diyl)-co-2,5-thiophene]) shown in Table 3.

[Reaction Scheme]

[Chemical Formula 14]

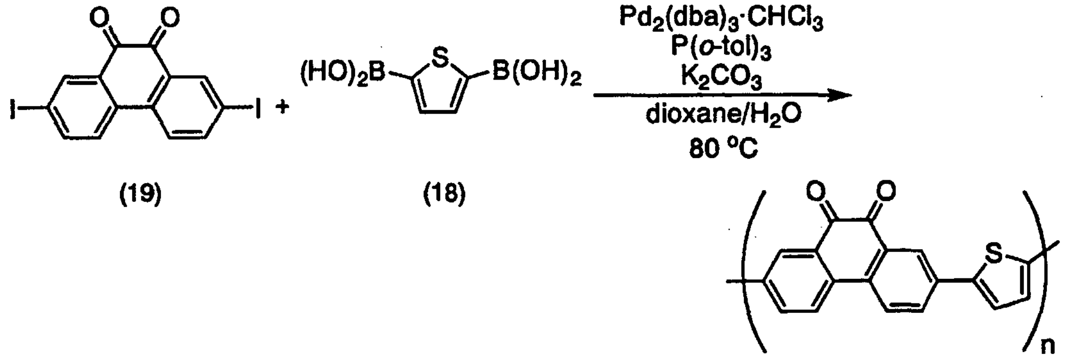


(19) (18)

(2b)

The 2,7-diodo-9,10-phenanthrenequinone (19) (693 mg, 1.5 mmol) and the thiophene-1,4-diboronic acid (18) (258 mg, 1.5 mmol) were dissolved in 8.0 ml of dioxane. To the resultant solution were added $Pd_2(dba)_3 \cdot CHCl_3$ (95 mg, 0.092 mmol), 56 mg (0.184 mmol) of tris(o-tolyl)phosphine, 623 mg (4.5 mmo)) of potassium carbonate, and 0.9 m) of water. The mixture was heated overnight at 80°C under an argon atmosphere. After completion of the reaction, the reaction mixture was cooled to room temperature, and was then filtrated. The resultant solids were washed with a solvent mixture containing hexane and ethyl acetate, and chloroform. After vacuum drying, 270 mg (95%) of the phenanthrenequinone-containing polymer (2b) was obtained as black solids. The resultant polymer had a weight-average molecular weight of 1800 and a number-average molecular weight of 1400. The average degree of polymerization n calculated based on the weight-average molecular weight was about 6. IR (solid): 1671, 1594, 1466, 1283 $cm^{-1}$.

Example 8

In accordance with the following reaction scheme, 2,7-diiodo-9,10-phenanthrenequinone (19) and 2,2'-bithiophene-5,5'-diboronic add bis(pinacol) ester (22) were subjected to a Suzuki-Miyaura coupling reaction to synthesize the phenanthrenequinone-containing polymer (2c) (substance name: poly[9,10-phenanthrenequinone-2,7-diyl(2,2'-bithiophene-5,5'-diyl)]) shown in Table 3.
[Reaction Scheme]
[Chemical Formula 15]

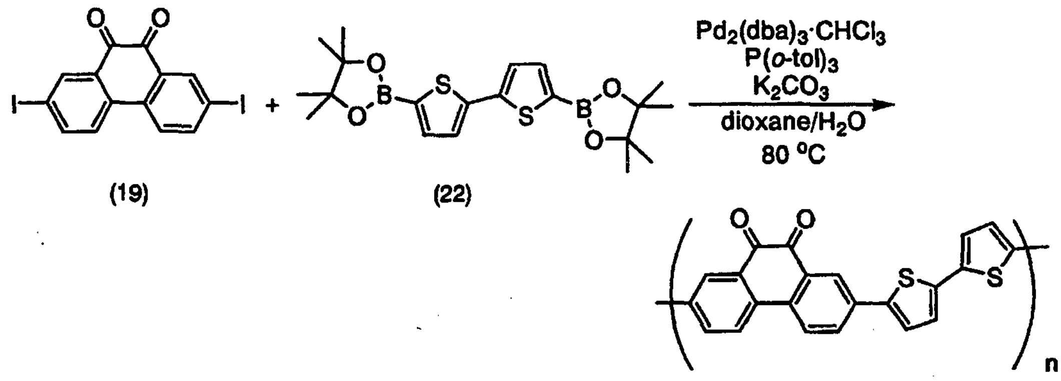


(19) (22)

(2c)

The 2,7-diiodo-9,10-phenanthrenequinone (19) (463 mg, 1.0 mmol) and the 2,2'-bithiophene-5,5'-diboronic acid bis(pinacol) ester (22) (418 mg, 1.0 mmol) were dissolved in 6.0 ml of 1,4-dioxane. To the resultant solution were added $Pd_2(dba)_3{\cdot}CHCl_3$ (67 mg, 0.064 mmol), 39 mg (0.13 mmol) of tris(o-tolyl)phosphine, 416 mg (3.0 mmol) of potassium carbonate, and 0.6 ml of water. The mixture was heated overnight at 80°C under an argon atmosphere. After completion of the reaction, the reaction mixture was cooled to room temperature, and was then filtrated. The resultant solids were washed with water and chloroform. After vacuum drying, 501 mg (> 99%) of the phenanthrenequinone-containing polymer (2c) was obtained as black solids. IR (solid): 1675, 1593, 1474, 1285 $cm^{-1}$.

Example 9

In accordance with the following reaction scheme, 3,6-dibromo-9,10-phenanthrenequinone (21) and 2,2'-bithiophene-5,5'-diboronic acid bis(pinacol) ester (22) were subjected to a Suzuki-Miyaura coupling reaction to synthesize the phenanthrenequinone-containing polymer (2e) (substance name: poly[9,10-phenanthrenequinone-3,6-diyl(2,2'-bithiophene-5,5'-diyl)]) shown in Table 3.
[Reaction Scheme]
[Chemical Formula 16]

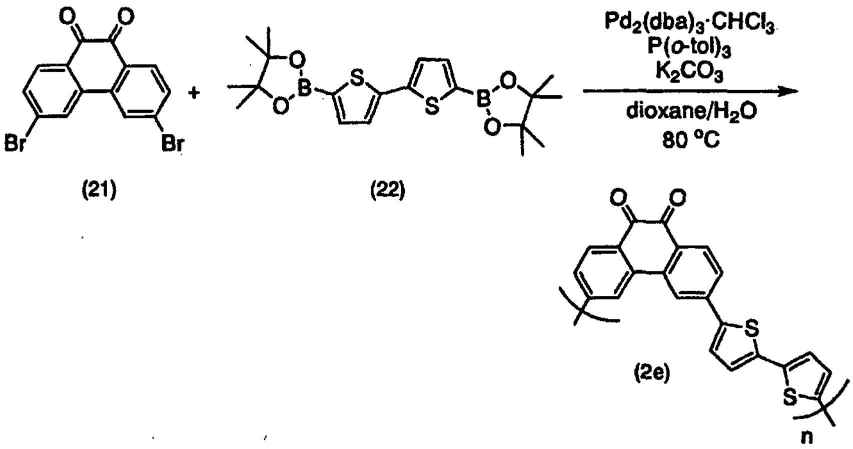


(21) (22) (2e)

The 3,6-dibromo-9,10-phenanthrenequinone (21) (368 mg, 1.0 mmol) and the 2,2'-bithiophene-5,5'-diboronic acid bis(pinacol) ester (22) (420 mg, 1.0 mmol) were dissolved in 6.0 ml of 1,4-dioxane. To the resultant solution were added $Pd_2(dba)_3 \cdot CHCl_3$ (64 mg, 0.062 mmol), 39 mg (0.13 3 mmol) of tris(o-tolyl)phosphine, 417 mg (3.0 mmol) of potassium carbonate, and 0.6 ml of water. The mixture was heated overnight at 80°C under an argon atmosphere. After completion of the reaction, the mixture was cooled to room temperature, and was then filtrated. The resultant solids were washed with water and chloroform. After vacuum drying, 351 mg (about 95%) of the phenanthrenequinone-containing polymer (2e) was obtained as black solids. IR (solid): 1661, 1590, 1437 $cm^{-1}$.

Example 10

In accordance with the following reaction scheme, 2-(3-thienyl)-9,10-phenanthrenequinone (23) was oxidatively polymerized to synthesize a phenanthrenequinone-containing polymer (3a) (substance name: poly(3-(9,10-phenanthrenequinone-2-yl)thiophene-2,5-diyl]).
[Reaction Scheme]
[Chemical Formula 17]

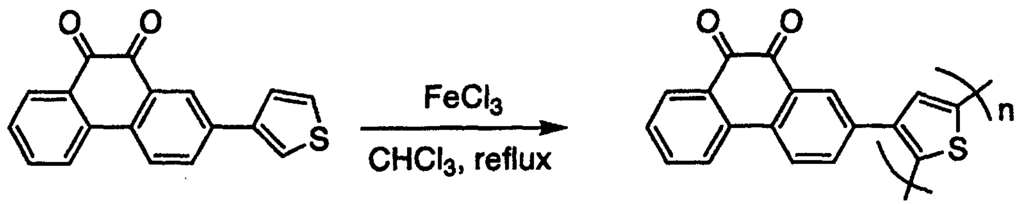


(23) (3a)

The 2-(3-thienyl)-9,10-phenanthrenequinone (23) (147 mg, 0.51 mmol) and 329 mg (2.0 mmol) of iron(III)chloride were dissolved in 10.0 ml of chloroform. The resultant solution was allowed to reflux overnight at 80°C under an argon atmosphere. After completion of the reaction, the reaction solution was cooled to room temperature, and was then filtrated. The resultant solids were washed with methanol. After vacuum drying, 83.5 mg (about 57%) of the phenanthrenequinone-containing polymer (3a) was obtained as brown solids. IR (solid): 1679, 1596, 1474, 1449, 1283 $cm^{-1}$.

Test Example 1

The solubility of the phenanthrenequinone-containing compounds and the phenanthrenequinone-containing polymers obtained in Examples 1 to 10 in an electrolyte was evaluated in the following manner.
A phenanthrenequinone-containing compound or a phenanthrenequinone-containing polymer as obtained in Examples 1 to 10 was mixed with 20 cc of an electrolyte so as to attain a concentration of 5.0 mmol/l, thereby giving a test liquid. This test liquid was subjected to ultraviolet-visible absorption spectrum measurement to examine the solubility

of each compound in the electrolyte. The ultraviolet-visible absorption spectrum measurement was performed under the following measurement conditions: a measurement range of 190 to 900 nm and a reference solution of a liquid electrolyte. A UV-2550 (trade name) manufactured by SHIMADZU CORPORATION was used as the measurement apparatus. A liquid electrolyte prepared by dissolving lithium fluoroborate in a concentration of 1.0 mol/L in propylene carbonate was used as the electrolyte.

As a comparative example, a solubility test was performed in the same manner as described above using 9,10-phenanthrenequinone.

As a result of performing the ultraviolet-visible absorption spectrum measurement, for 9,10-phenanthrenequinone of the comparative example, a large absorption peak was observed near 250 to 350 nm. In contrast, for the phenanthrenequinone-containing compounds and phenanthrenequinone-containing polymers obtained in Examples 1 to 10, no distinct absorption peaks were observed over the entire measurement area.

An observation by visual inspection confirmed that the electrolyte in which 9,10-phenanthrenequinone of the comparative example had been dissolved was colored in yellow, as a result of the compound being entirely dissolved in the electrolyte. In contrast, it was confirmed that, for the phenanthrenequinone-containing compounds or phenanthrenequinone-containing polymers obtained in Examples 1 to 10, no coloration of the electrolyte was observed and the compounds were mostly deposited.

Test Example 2

The electrode properties of the phenanthrenequinone-containing compound (1a) obtained in Example 1 were examined in the following manner. First, in an argon box equipped with a gas purifier, 20 mg of the phenanthrenequinone-containing compound (1a) serving as an electrode active material and 20 mg of acetylene black serving as a conductive auxiliary agent were uniformly mixed under an argon gas atmosphere. To the resultant mixture was added 1 ml of N-methyl-2-pyrrolidone serving as a solvent, and 5 mg of polyvinylidene fluoride serving as a binder was further added thereto, followed by uniform mixing, to prepare a black slurry. The binder was used in order to bond the electrode active material and the conductive auxiliary agent together.

The slurry thus obtained was applied to the surface of a 20 μ m-thick aluminum foil (current collector), and vacuum-dried for 2 hours at room temperature. After drying, a disc having a diameter of 13.5 mm was punched out of the resultant structure to produce an electrode in which an active material layer containing a mixture of the electrode active material, the conductive auxiliary agent, and the binder was formed.

The electrode thus obtained was used as a working electrode, and metal lithium was used for a counter electrode and a reference electrode. These electrodes were immersed in an electrolyte to fabricate an evaluation battery, and the potential sweeping was performed in a potential range from 2.0 to 4.0 V relative to lithium. The sweeping rate was 0.1 mV/sec. As the electrolyte, a liquid electrolyte prepared by dissolving lithium fluoroborate in a concentration of 1.0 mol/L in a solvent mixture containing propylene carbonate and ethylene carbonate (volume ratio 1:1) was used. The result is shown in FIG. 4. FIG. 4 is a cyclic voltammogram of the evaluation battery using the electrode active material of the present invention [phenanthrenequinone-containing compound (1a)].

As shown in FIG 4, a current peak indicating the first-step reduction reaction (the reaction corresponding to scheme (IIA)) was observed at around 3.1 V, and a current peak indicating the second-step reduction reaction (the reaction corresponding to scheme (IIB)) was observed at around 2.6 V. This indicates the reaction between the phenanthrenequinone-containing compound (1a) and Li ions. Additionally, a current peak indicating the oxidation reaction was observed at around 3.5 V Based on these, it was found that the phenanthrenequinone-containing compound (1a) underwent a reversible redox reaction. Further, no dissolution of the phenanthrenequinone-containing compound (1a) from the electrode was observed. From the foregoing, it can be seen that excellent cyde characteristics can be achieved by using the phenanthrenequinone-containing compound (1a).

Example 11

A coin battery as shown in FIG 5 was fabricated as one example of the power storage device of the present invention. FIG 5 is a vertical cross-sectional view schematically showing a configuration of a coin battery 1 that is one example of the power storage device of the present invention.

A positive electrode includes a positive electrode current collector 12 made of an aluminum foil and a positive electrode active material layer 13 formed on the positive electrode current collector 12 and containing the phenanthrenequinone-containing compound (1 a). The positive electrode was produced in the same manner as in the electrode production method in Test Example 2. This positive electrode was disposed such that the positive electrode current collector 12 was brought into contact with the inner surface of a case 11, and a separator 14 made of a porous polyethylene sheet was placed on the positive electrode.

Then, a non-aqueous electrolyte was injected into the case 11. As the non-aqueous electrolyte, an electrolyte

prepared by dissolving lithium hexafluorophosphate in a concentration of 125 mol/L in a solvent mixture containing ethylene carbonate and ethylmethyl carbonate (weight ratio 1:3) was used.

Meanwhile, a negative electrode current collector 17 and a negative electrode active material layer 16 were press-fitted in this order onto the inner surface of a sealing plate 15 to provide a negative electrode. As the negative electrode active material layer 16, a 300 μm-thick metal lithium was used. As the negative electrode current collector 17, a 100 μm-thick stainless steel foil was used.

The case 11 in which the positive electrode was provided and the sealing plate 15 on which the negative electrode was provided were stacked such that the negative electrode active material layer 16 was in pressure contact with the separator 14, with a gasket 18 being placed around the circumference, and then sealed by crimping using a pressing machine. Thus, a coin battery of the present invention having a thickness of 1.6 mm and a diameter of 20 mm was fabricated.

Example 12

A coin battery of the present invention was fabricated in the same manner as in Example 11 except that the phenanthrenequinone-containing compound (1i) synthesized in Example 4 was used as the positive electrode active material in place of the phenanthrenequinone-containing compound (1a).

Example 13

A coin battery of the present invention was fabricated in the same manner as in Example 11 except that the phenanthrenequinone-containing polymer (2b) synthesized in Example 7 was used as the positive electrode active material in place of the phenanthrenequinone-containing compound (1a).

Example 14

A coin battery of the present invention was fabricated in the same manner as in Example 11 except that the phenanthrenequinone-containing polymer (2a) synthesized in Example 5 was used as the positive electrode active material in place of the phenanthrenequinore-containing compound (1a).

Example 15

A coin battery of the present invention was fabricated in the same manner as in Example 11 except that the phenanthrenequinone-containing polymer (2d) synthesized in Example 6 was used as the positive electrode active material in place of the phenanthrenequinone-containing compound (1 a).

Example 16

A coin battery of the present invention was fabricated in the same manner as in Example 11 except that the phenanthrenequinone-containing polymer (2c) synthesized in Example 8 was used as the positive electrode active material in place of the phenanthrenequinone-containing compound (1a).

Example 17

A coin battery of the present invention was fabricated in the same manner as in Example 11 except that the phenanthrenequinone-containing polymer (2e) synthesized in Example 9 was used as the positive electrode active material in place of the phenanthrenequinone-containing compound (1a).

Example 18

A coin battery of the present invention was fabricated in the same manner as in Example 11 except that the phenanthrenequinone-containing polymer (3a) synthesized in Example 10 was used as the positive electrode active material in place of the phenanthrenequinone-containing compound (1a).

Comparative Example 1

A coin battery for comparison was fabricated in the same manner as in Example 11 except that 9,10-phenanthrenequinone was used as the positive electrode active material in place of the phenanthrenequinone-containing compound (1 a).

Test Example 3 [Evaluation of Charging-Discharging]

The coin batteries of the present invention obtained in Examples 11 to 18 and the coin battery of Comparative Example 1 were subjected to a charge-discharge test The charge-discharge test was conducted under the charge-discharge conditions of a current value of 0.2C rate (5 hour rate) with respect to the theoretical capacity of each coin battery and a voltage range from 2.0 V to 4.0 V. The charge-discharge test was started with discharging, and an interval of 5 minutes was set between discharging and charging, and between charging and discharging. The charge-discharge test was repeated 20 times. The results are shown in Table 4.

Table 4 shows the theoretical capacity per gram of the positive electrode active material (hereinafter, simply referred to as "theoretical capacity"), the charge-discharge capacity per gram of the positive electrode active material (hereinafter, simply referred to as "charge-discharge capacity"), the utilization rate (%), and the repetition capacity retention rate (%). The charge-discharge capacity was calculated based on the initial discharge capacity of each of the coin batteries. The utilization rate (%) is the percentage of the charge-discharge capacity with respect to the theoretical capacity. The repetition capacity retention rate (%) is the percentage of the charge-discharge capacity at the 20th cyde relative to the charge-discharge capacity at the initial cycle.

Charge-discharge curves of the coin batteries of Examples 11 to 18 are shown in FIGS. 6 to 12. A charge-discharge curve of the coin battery of Comparative Example 1 is shown in FIG. 13. From FIGS. 6 to 12, it can be confirmed that the coin batteries of the present invention are capable of performing reversible charging-discharging in a potential range from 2.0 V to 4.0 V.

[Table 4]

| | Positive electrode active material*1 | Capacity (mAh/g) | | Utilization rate (%) | Repetition capacity retention rate (%) |
|---|---|---|---|---|---|
| | | Theoretical capacity | Charge-discharge capacity | | |
| Example 11 | 1a | 219 | 175 | 80 | 75 |
| Example 12 | 1i | 216 | 179 | 83 | 79 |
| Example 13 | 2b | 190 | 175 | 92 | 97 |
| Example 14 | 2a | 190 | 165 | 87 | 92 |
| Example 15 | 2d | 186 | 175 | 94 | 95 |
| Example 16 | 2c | 145 | 133 | 92 | 96 |
| Example 17 | 2e | 145 | 128 | 88 | 93 |
| Example 18 | 3a | 186 | 166 | 89 | 91 |
| Com. Ex. 1 | *2 | 257 | 167 | 65 | 15 |

*1 phenanthrenequinone-containing compound or phenanthrenequinone-containing polymer
*2 9,10-phenanthrenequinone

From Table 4, it can be seen that the batteries of Examples 11 to 18 are high-capacity power storage devices, exhibiting a large charge-discharge capacity value of 128 to 179 mAh/g. Further, all of the batteries of Examples 11 to 18 showed a large value of 80% or greater, whereas the utilization rate of the battery of Comparative Example 1 was 65%. In particular, the batteries of Examples 13 to 18 all showed a very high utilization rate of 88% or greater.

Moreover, the repetition capacity retention rate of each of the batteries of Examples 11 to 18 was 75% or greater, showing a great performance improvement, whereas the repetition capacity retention rate of the battery of Comparative Example 1 was 15%, showing a significant deterioration. In particular, the batteries of Examples 13 to 18 all exhibited a very high value of 91 % or greater.

When the battery of Comparative Example 1 was disassembled after charging and discharging, a green coloration of the electrolyte that seemed to have resulted from dissolution of the positive electrode active material was observed. Based on this, the dissolution of the positive electrode active material into the electrolyte during charging-discharging can be considered as a possible cause of the decrease in the utilization rate and the decrease in the repetition capacity retention rate. On the other hand, all of the batteries of Examples 11 to 18 exhibited an improved utilization rate and an improved repetition capacity retention rate compared to Comparative Example 1. Based on this, it is believed that the dissolution of the positive electrode active material in the electrolyte during charging-discharging was significantly inhibited in Examples 11 to 18. In this respect, it can be seen that the electrode active material of the present invention has excellent properties suitable for a power storage device, in particular, a non-aqueous power storage device.

The phenanthrenequinone-containing compounds (1a) and (1i) used in Examples 11 and 12 are dimers in which 9,10-phenanthrenequinone skeletons are bonded via a phenylene group or a divalent residue of thiophene, each serving as an aromatic linker. Accordingly, it was confirmed that designing a compound in which 9,10-phenanthrenequinone skeletons are bonded together via a functional group such as a phenylene group and a divalent residue of thiophene is considerably effective in inhibiting the dissolution in an electrolyte solvent and hence in improving the utilization rate.

From the results for Examples 13 to 18, it is evident that synthesizing a polymer in which a plurality of 9,10-phenanthrenequinone skeletons are bonded via an aromatic linker compound is considerably effective in improving the utilization rate and the repetition capacity retention rate. It was also confirmed that a phenylene group, a divalent residue of thiophene, a divalent residue of a compound in which a plurality of thiophenes are bonded, and the like, which are aromatic linkers, are desirable as a linker site connecting together 9,10-phenanthrenequinone skeletons serving as reactive skeletons.

Further, a sufficient insolubilizing effect was confirmed when the polymers had a number-average molecular weight of 1700 to 5700 and an average degree of polymerization of about 6 to 20.

For Examples 16 to 18, which used, as a linker site, a divalent residue of a compound in which a plurality of thiophenes are bonded, a significant improvement in the charge-discharge voltage was also confirmed, verifying that a further capacity increase was possible.

As is dear from Table 4 and FIGS. 6 to 12, it was confirmed that a superior power storage device that exhibits a high utilization rate and a high repetition capacity retention rate can be obtained by using the electrode active material of the present invention.

Example 19

A coin battery of the present invention having a thickness of 1.6 mm and a diameter of 20 mm was fabricated in the same manner as in Example 11 except that the mixing ratio of ethylene carbonate and ethylmethyl carbonate in a non-aqueous electrolyte was changed from 1:3 to 1:1 in terms of weight ratio, and that a 300 μm-thidc graphite layer was used as the negative electrode active material layer 16 in place of a 300 μm-thick metal lithium. In addition, the graphite layerwas precharged with a current value of 0.1 $mA/cm^2$, using a U metal counter electrode, and lithium ions were intercalated before assembly of the battery.

The coin battery of the present invention thus obtained was subjected to charging and discharging with a constant current. The charging and discharging were conducted under the charge-discharge conditions of a current value of 0.133 mA and a voltage range from 2.5 V to 4.5 V. The results are shown FIG. 14. FIG 14 is a charge-discharge curve of the coin battery of Example 19. In the graph shown in FIG 14, the vertical axis represents the battery voltage (V), and the horizontal axis represents the quantity of electricity (C).

From FIG. 14, it was confirmed that a reversible charge/discharge reaction took place in the coin battery of the present invention. Furthermore, as a result of repeating charge-discharge 5 times, it was found that the capacity decrease resulting from repeated charge-discharge was small, and favorable charge/discharge cyde characteristics were achieved.

Example 20

(1) Production of Negative Eledrode

In a dry box equipped with a gas purifier, 2.5 mg of the phenanthrenequinone compound (1a) and 10 mg of acetylene black serving as a conductive auxiliary agent were uniformly mixed under an argon gas atmosphere, and 1 ml of N-methyl-2-pyrrolidone serving as a solvent was added thereto. 5 mg of polyvinylidene fluoride serving as a binder

was further added thereto in order to bond the electrode active material and the conductive auxiliary agent together, followed by uniform mixing, to prepare a black slurry.

The slurry thus obtained was applied to a 30 μm-thick foil made of stainless steel (current collector), and vacuum dried for one hour at room temperature. After drying, a disc having a diameter of 13.5 mm was punched out of the resultant structure to produce a negative electrode in which an active material layer containing a mixture of the active material, the conductive auxiliary agent, and the binder was formed on the current collector.

(2) Production of Positive Electrode

A positive electrode was produced in the same manner as the electrode production method in Test Example 2 except that lithium cobaltate ($LiCoO_2$) was used as the positive electrode active material in place of the phenanthrenequinone compound (1a).

A coin battery of the present invention was fabricated in the same manner as in Example 10 except that the positive electrode and negative electrode thus obtained were used. The obtained coin battery of the present invention was subjected to charging and discharging with a constant current The charging and discharging were conducted under the charge-discharge conditions of a current value of 0.133 mA and a voltage range from 0.5 V to 2.5 V As a result, it was confirmed that a reversible charge/discharge reaction took place. Furthermore, as a result of repeating charge-discharge 5 times, it was found that the capacity decrease resulting from repeated charge-discharge was small, and favorable charge/discharge cyde characteristics were achieved.

Industrial Applicability

The electrode active material of the present invention can be suitably used for various power storage devices. Furthermore, the power storage device of the invention has a smaller weight, a high output, and a high capacity, and thus can be suitably used, for example, for a power source of various portable electronic equipment and transportation equipment, or for an uninterruptible power supply system.

## Claims

1. An electrode active material used for a power storage device that converts electron transfer associated with a redox reaction into electric energy, comprising:

    an organic compound having, in a molecule thereof, a plurality of electrode reaction sites that contribute to an electrochemical redox reaction and a linker site that is disposed between said plurality of electrode reaction sites and that does not contribute to said electrochemical redox reaction,
    wherein said electrode reaction sites are residues of a 9,10-phenanthrenequinone compound represented by general formula (A), and
    said linker site is a residue of an aromatic compound and does not contain any ketone group;
    General formula (A)

    [Chemical Formula 1]

    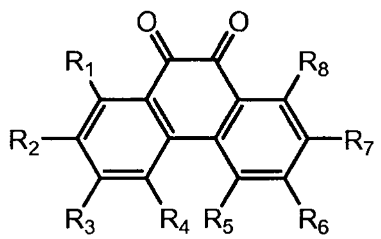

    ( A )

    wherein $R_1$ to $R_8$ each independently represent a hydrogen atom, a fluorine atom, a cyano group, a $C_{1-4}$ alkyl group, a $C_{2-4}$ alkenyl group, a $C_{3-6}$ cycloalkyl group, a $C_{3-6}$ cycloalkenyl group, an aryl group, or an aralkyl group; and each of said groups represented by $R_1$ to $R_8$ optionally has, as a substituent, a group containing at least one atom selected from the group consisting of a fluorine atom, a nitrogen atom, an oxygen atom, a sulfur

atom, and a silicon atom.

2. The electrode active material for a power storage device in accordance with claim 1, wherein said linker site is a di- or trivalent residue of an aromatic compound optionally containing at least one of a sulfur atom and a nitrogen atom and optionally having at least one substituent selected from the group consisting of a fluorine atom, a saturated aliphatic group, and an unsaturated aliphatic group.

3. The electrode active material for a power storage device in accordance with claim 1, wherein said organic compound is a phenanthrenequinone-containing compound represented by general formula (1):

$$Q_1\text{-}L_1\text{-}Q_1 \qquad (1)$$

wherein $Q_1$ is an electrode reaction site, and each of two $Q_1$s independently represents a univalent residue of a 9,10-phenanthrenequinone compound represented by general formula (A);

[Chemical Formula 2]

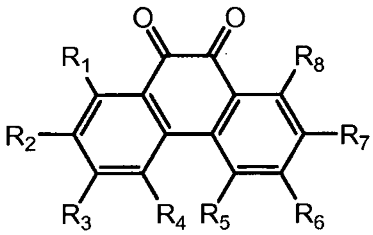

( A )

(wherein $R_1$ to $R_8$ each independently represent a hydrogen atom, a fluorine atom, a cyano group, a $C_{1-4}$ alkyl group, a $C_{2-4}$ alkenyl group, a $C_{3-6}$ cycloalkyl group, a $C_{3-6}$ cycloalkenyl group, an aryl group, or an aralkyl group; and each of said groups represented by $R_1$ to $R_8$ optionally has, as a substituent, a group containing at least one atom selected from the group consisting of a fluorine atom, a nitrogen atom, an oxygen atom, a sulfur atom, and a silicon atom); and $L_1$ is a linker site and represents a divalent residue of the aromatic compound optionally containing at least one of a sulfur atom and a nitrogen atom and optionally having at least one substituent selected from the group consisting of a fluorine atom, a saturated aliphatic group, and an unsaturated aliphatic group.

4. The electrode active material for a power storage device in accordance with claim 1, wherein said organic compound is a phenanthrenequinone-containing polymer represented by general formula (2):

$$(\text{-}Q_2\text{-}L_1\text{-})_n \qquad (2)$$

wherein $Q_2$ is an electrode reaction site, and each of n $Q_2$s independently represents a divalent residue of a 9,10-phenanthrenequinone compound represented by general formula (A);

[Chemical Formula 3]

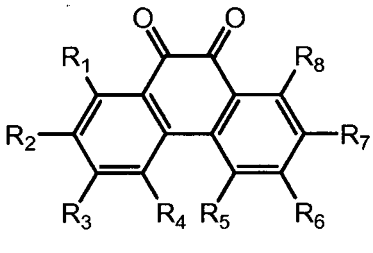

( A )

(wherein $R_1$ to $R_8$ each independently represent a hydrogen atom, a fluorine atom, a cyano group, a $C_{1-4}$ alkyl

group, a $C_{2-4}$ alkenyl group, a $C_{3-6}$ cycloalkyl group, a $C_{3-6}$ cycloalkenyl group, an aryl group, or an aralkyl group; and each of said groups represented by $R_1$ to $R_8$ optionally has, as a substituent, a group containing at least one atom selected from the group consisting of a fluorine atom, a nitrogen atom, an oxygen atom, a sulfur atom, and a silicon atom); $L_1$ is a linker site, and each of n $L_1$s independently represents a divalent residue of the aromatic compound optionally containing at least one of a sulfur atom and a nitrogen atom and optionally having at least one substituent selected from the group consisting of a fluorine atom, a saturated aliphatic group, and an unsaturated aliphatic group; and n is the number of monomer repeat units $-Q_2-L_1-$ and represents an integer of 3 or greater.

**5.** The electrode active material for a power storage device in accordance with claim 1,
wherein said organic compound is a phenanthrenequinone-containing polymer represented by general formula (3):

$$(-L_2(Q_1)-)_n \quad (3)$$

wherein $Q_1$ is an electrode reaction site, and each of n $Q_1$s independently represents a univalent residue of a 9,10-phenanthrenequinone compound represented by general formula (A):

[Chemical Formula 4]

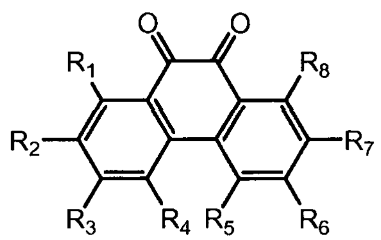

( A )

(wherein $R_1$ to $R_8$ each independently represent a hydrogen atom, a fluorine atom, a cyano group, a $C_{1-4}$ alkyl group, a $C_{2-4}$ alkenyl group, a $C_{3-6}$ cycloalkyl group, a $C_{3-6}$ cycloalkenyl group, an aryl group, or an aralkyl group; and each of said groups represented by $R_1$ to $R_8$ optionally has, as a substituent, a group containing at least one atom selected from the group consisting of a fluorine atom, a nitrogen atom, an oxygen atom, a sulfur atom, and a silicon atom); $L_2$ is a linker site and each of n $L_2$s independently represents a trivalent residue of the aromatic compound optionally containing at least one of a sulfur atom and a nitrogen atom and optionally having at least one substituent selected from the group consisting of a fluorine atom, a saturated aliphatic group, and an unsaturated aliphatic group; and n is the number of monomer repeat units $-L_2(Q_1)-$ and represents an integer of 3 or greater.

**6.** The electrode active material for a power storage device in accordance with claim 1 or 2,
wherein said aromatic compound is at least one selected from the group consisting of a monocyclic aromatic compound, a fused-ring aromatic compound in which at least two 6-membered aromatic rings are fused, a fused-ring aromatic compound in which at lease one 5-membered aromatic ring and at least one 6-membered aromatic ring are fused, and 5- and 6-membered heterocyclic aromatic compounds having a nitrogen atom, a sulfur atom, or an oxygen atom as a heteroatom.

**7.** A power storage device comprising a positive electrode, a negative electrode, and an electrolyte and being capable of converting electron transfer associated with a redox reaction into electric energy,
wherein at least one of said positive electrode and said negative electrode contains the electrode active material for a power storage device in accordance with any one of claims 1 to 6.

**8.** The power storage device in accordance with claim 7,
wherein said positive electrode contains, as a positive electrode active material, the electrode active material for a power storage device in accordance with any one of claims 1 to 6,
said negative electrode contains a negative electrode active material capable of absorbing and desorbing lithium ions, and
said electrolyte contains a salt comprising a lithium cation and an anion.

**9.** Electronic equipment comprising the power storage device in accordance with claim 7 or 8.

**10.** Transportation equipment comprising the power storage device in accordance with claim 7 or 8.

## Patentansprüche

**1.** Elektrodenaktivmaterial, das für eine Energiespeichervorrichtung verwendet wird, die einen mit einer Redoxreaktion assoziierten Elektronentransfer in elektrische Energie umwandelt, umfassend:

eine organische Verbindung mit, in einem Molekül davon, einer Mehrzahl von Elektrodenreaktionsstellen, die zu einer elektrochemischen Redoxreaktion beitragen, und einer Verbindungsstelle, die zwischen der Mehrzahl von Elektrodenreaktionsstellen angeordnet ist und die nicht zu der elektrochemischen Redoxreaktion beiträgt, wobei die Elektrodenreaktionsstellen Reste einer 9,10-Phenanthrenchinonverbindung, die durch die allgemeine Formel (A) dargestellt ist, sind, und
die Verbindungsstelle einen Rest einer aromatischen Verbindung ist und keine Ketongruppe enthält;
Allgemeine Formel (A)

[Chemische Formel 1]

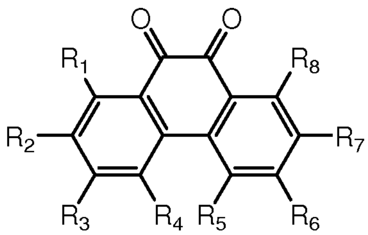

(A)

wobei $R_1$ bis $R_8$ jeweils unabhängig ein Wasserstoffatom, ein Fluoratom, eine Cyanogruppe, eine $C_{1-4}$ Alkylgruppe, eine $C_{2-4}$ Alkenylgruppe, eine $C_{3-6}$ Cycloalkylgruppe, eine $C_{3-6}$ Cycloalkenylgruppe, eine Arylgruppe oder eine Aralkylgruppe darstellen; und jede der durch $R_1$ bis $R_8$ dargestellten Gruppen optional als einen Substituenten eine Gruppe aufweist, die zumindest ein Atom ausgewählt aus der Gruppe bestehend aus einem Fluoratom, einem Stickstoffatom, einem Sauerstoffatom, einem Schwefelatom und einem Siliziumatom enthält.

**2.** Elektrodenaktivmaterial für eine Energiespeichervorrichtung nach Anspruch 1,
wobei die Verbindungsstelle ein di- oder trivalenter Rest einer aromatischen Verbindung ist, der optional zumindest eines aus einem Schwefelatom und einem Stickstoffatom enthält und optional zumindest einen Substituenten ausgewählt aus der Gruppe bestehend aus einem Fluoratom, einer gesättigten aliphatischen Gruppe und einer ungesättigten aliphatischen Gruppe aufweist.

**3.** Elektrodenaktivmaterial für eine Energiespeichervorrichtung nach Anspruch 1,
wobei die organische Verbindung eine Phenanthrenchinonenthaltende Verbindung ist, die durch die allgemeine Formel (1) dargestellt ist:

$$Q_1\text{-}L_1\text{-}Q_1 \qquad (1)$$

wobei $Q_1$ eine Elektrodenreaktionsstelle ist, und jede der zwei $Q_1$ unabhängig einen univalenten Rest einer 9,10-Phenanthrenchinonverbindung darstellt, die durch die allgemeine Formel (A) dargestellt ist;

[Chemische Formel 2]

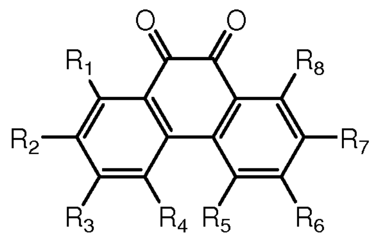

(A)

(wobei $R_1$ bis $R_8$ jeweils unabhängig ein Wasserstoffatom, ein Fluoratom, eine Cyanogruppe, eine $C_{1-4}$ Alkylgruppe, eine $C_{2-4}$ Alkenylgruppe, eine $C_{3-6}$ Cycloalkylgruppe, eine $C_{3-6}$ Cycloalkenylgruppe, eine Arylgruppe oder eine Aralkylgruppe darstellen; und jede der durch $R_1$ bis $R_8$ dargestellten Gruppen optional als einen Substituenten eine Gruppe aufweist, die zumindest ein Atom ausgewählt aus der Gruppe bestehend aus einem Fluoratom, einem Stickstoffatom, einem Sauerstoffatom, einem Schwefelatom und einem Siliziumatom enthält); und $L_1$ eine Verbindungsstelle ist und einen divalenten Rest der aromatischen Verbindung darstellt, die optional zumindest eines aus einem Schwefelatom und einem Stickstoffatom enthält und optional zumindest einen Substituenten ausgewählt aus der Gruppe bestehend aus einem Fluoratom, einer gesättigten aliphatischen Gruppe und einer ungesättigten aliphatischen Gruppe aufweist.

**4.** Elektrodenaktivmaterial für eine Energiespeichervorrichtung nach Anspruch 1, wobei die organische Verbindung ein Phenanthrenchinon-enthaltendes Polymer ist, das durch die allgemeine Formel (2) dargestellt ist:

$$(-Q_2-L_1-)_n \qquad (2)$$

wobei $Q_2$ eine Elektrodenreaktionsstelle ist, und jedes aus n $Q_2$ unabhängig einen divalenten Rest einer 9,10-Phenanthrenchinonverbindung darstellt, die durch die allgemeine Formel (A) dargestellt ist;

[Chemische Formel 3]

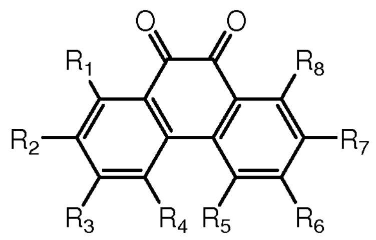

(A)

(wobei $R_1$ bis $R_8$ jeweils unabhängig ein Wasserstoffatom, ein Fluoratom, eine Cyanogruppe, eine $C_{1-4}$ Alkylgruppe, eine $C_{2-4}$ Alkenylgruppe, eine $C_{3-6}$ Cycloalkylgruppe, eine $C_{3-6}$ Cycloalkenylgruppe, eine Arylgruppe oder eine Aralkylgruppe darstellen; und jede der durch $R_1$ bis $R_8$ dargestellten Gruppen optional als einen Substituenten eine Gruppe aufweist, die zumindest ein Atom ausgewählt aus der Gruppe bestehend aus einem Fluoratom, einem Stickstoffatom, einem Sauerstoffatom, einem Schwefelatom und einem Siliziumatom enthält); $L_1$ eine Verbindungsstelle ist, und jede der n $L_1$ unabhängig einen divalenten Rest der aromatischen Verbindung darstellt, die optional zumindest eines aus einem Schwefelatom und einem Stickstoffatom enthält und optional zumindest einen Substituenten ausgewählt aus der Gruppe bestehend aus einem Fluoratom, einer gesättigten aliphatischen Gruppe und einer ungesättigten aliphatischen Gruppe aufweist; und n die Zahl der Monomerwiederholungseinheiten $-Q_2-L_1-$ ist und eine ganze Zahl von 3 oder größer darstellt.

**5.** Elektrodenaktivmaterial für eine Energiespeichervorrichtung nach Anspruch 1, wobei die organische Verbindung ein Phenanthrenchinon-enthaltendes Polymer ist, das durch die allgemeine Formel (3) dargestellt ist:

$(-L_2(Q_1)-)_n$ (3)

wobei $Q_1$ eine Elektrodenreaktionsstelle ist, und jedes aus n $Q_1$ unabhängig einen divalenten Rest einer 9,10-Phenanthrenchinonverbindung darstellt, die durch die allgemeine Formel (A) dargestellt ist;

[Chemische Formel 4]

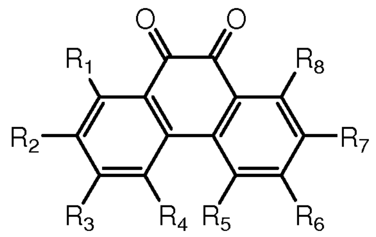

(A)

(wobei $R_1$ bis $R_8$ jeweils unabhängig ein Wasserstoffatom, ein Fluoratom, eine Cyanogruppe, eine $C_{1-4}$ Alkylgruppe, eine $C_{2-4}$ Alkenylgruppe, eine $C_{3-6}$ Cycloalkylgruppe, eine $C_{3-6}$ Cycloalkenylgruppe, eine Arylgruppe oder eine Aralkylgruppe darstellen; und jede der durch $R_1$ bis $R_8$ dargestellten Gruppen optional als einen Substituenten eine Gruppe aufweist, die zumindest ein Atom ausgewählt aus der Gruppe bestehend aus einem Fluoratom, einem Stickstoffatom, einem Sauerstoffatom, einem Schwefelatom und einem Siliziumatom enthält); $L_2$ eine Verbindungsstelle ist, und jede der n $L_2$ unabhängig einen trivalenten Rest der aromatischen Verbindung darstellt, die optional zumindest eines aus einem Schwefelatom und einem Stickstoffatom enthält und optional zumindest einen Substituenten ausgewählt aus der Gruppe bestehend aus einem Fluoratom, einer gesättigten aliphatischen Gruppe und einer ungesättigten aliphatischen Gruppe aufweist; und n die Zahl der Monomerwiederholungseinheiten $-L_2(Q_1)-$ ist und eine ganze Zahl von 3 oder größer darstellt.

6. Elektrodenaktivmaterial für eine Energiespeichervorrichtung nach Anspruch 1 oder 2,
wobei die aromatische Verbindung zumindest eine ist ausgewählt aus der Gruppe bestehend aus einer monocyclischen aromatischen Verbindung, einer aromatischen Verbindung mit einem kondensierten Ringsystem, bei welchem zumindest zwei 6-gliedrige aromatische Ringe kondensiert sind, einer aromatischen Verbindung mit einem kondensierten Ringsystem, bei welchem zumindest ein 5-gliedriger aromatischer Ring und zumindest ein 6-gliedriger aromatischer Ring kondensiert sind, und 5- und 6-gliedrige heterocyclische aromatische Verbindungen mit einem Stickstoffatom, einem Schwefelatom oder einem Sauerstoffatom als ein Heteroatom.

7. Energiespeichervorrichtung, die eine Positivelektrode, eine Negativelektrode und einen Elektrolyten enthält und in der Lage ist, einen mit einer Redoxreaktion assoziierten Elektrodentransfer in elektrische Energie umzuwandeln,
wobei zumindest eine aus der Positivelektrode und der Negativelektrode das Elektrodenaktivmaterial für eine Energiespeichervorrichtung nach einem der Ansprüche 1 bis 6 enthält.

8. Energiespeichervorrichtung nach Anspruch 7,
wobei die Positivelektrode als ein Positivelektrodenaktivmaterial das Elektrodenaktivmaterial für eine Energiespeichervorrichtung nach einem der Ansprüche 1 bis 6 enthält,
die Negativelektrode ein Negativelektrodenaktivmaterial enthält, das in der Lage ist, Lithiumionen zu absorbieren und zu desorbieren, und
der Elektrolyt ein Salz enthält, das Lithiumkationen und ein Anion enthält.

9. Elektronische Ausstattung, die die Energiespeichervorrichtung nach Anspruch 7 oder 8 umfasst.

10. Transportausstattung, die die Energiespeichervorrichtung nach Anspruch 7 oder 8 umfasst.

**Revendications**

1. Matériau actif d'électrode utilisé pour un dispositif de stockage d'énergie électrique qui convertit un transfert d'électrons associé avec une réaction de redox en énergie électrique, comprenant :

un composé organique ayant, dans une molécule de celui-ci, une pluralité de sites de réaction d'électrode qui contribuent à une réaction électrochimique de redox et un site de liaison qui est disposé entre ladite pluralité de sites de réaction d'électrode et qui ne contribue pas à la réaction électrochimique de redox,
dans lequel lesdits sites de réaction d'électrode sont des résidus d'un composé 9,10-phénanthrènequinone représenté par la formule générale (A), et
ledit site de liaison est un résidu d'un composé aromatique et ne contient pas de groupe cétone ;
Formule générale (A)

[Formule Chimique 1]

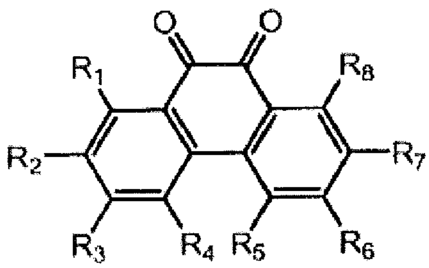

( A )

dans laquelle $R_1$ à $R_8$ représentent chacun indépendamment un atome d'hydrogène, un atome de fluor, un groupe cyano, un groupe alkyle en $C_1$-$C_4$, un groupe alcényle en $C_2$-$C_4$, un groupe cycloalkyle en $C_3$-$C_6$, un groupe cycloalcényle en $C_3$-$C_6$, un groupe aryle, ou un groupe aralkyle ; et chacun desdits groupes représentés par $R_1$ à $R_8$ a facultativement, comme un substituant, un groupe contenant au moins un atome choisi parmi le groupe consistant en un atome de fluor, un atome d'azote, un atome d'oxygène, un atome de soufre et un atome de silicium.

2. Matériau actif d'électrode pour un dispositif de stockage d'énergie électrique selon la revendication 1, dans lequel ledit site de liaison est un résidu di- ou trivalent d'un composé aromatique contenant facultativement au moins un parmi un atome de soufre et un atome d'azote et ayant facultativement au moins un substituant choisi parmi le groupe consistant en un atome de fluor, un groupe aliphatique saturé, et un groupe aliphatique insaturé.

3. Matériau actif d'électrode pour un dispositif de stockage d'énergie électrique selon la revendication 1, dans lequel ledit composé organique est un composé contenant une phénanthrènequinone représenté par la formule générale (1) :

$$Q_1\text{-}L_1\text{-}Q_1 \qquad (1)$$

dans laquelle $Q_1$ est un site de réaction d'électrode, et chacun de deux $Q_1$ représente individuellement un résidu univalent d'un composé 9,10-phénanthrènequinone représenté par la formule générale (A) ;

[Formule Chimique 2]

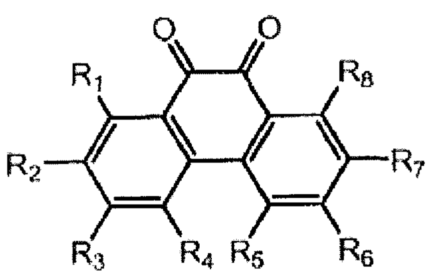

( A )

(dans laquelle $R_1$ à $R_8$ représentent chacun indépendamment un atome d'hydrogène, un atome de fluor, un groupe

cyano, un groupe alkyle en $C_1$-$C_4$, un groupe alcényle en $C_2$-$C_4$, un groupe cycloalkyle en $C_3$-$C_6$, un groupe cycloalcényle en $C_3$-$C_6$, un groupe aryle, ou un groupe aralkyle ; et chacun desdits groupes représentés par $R_1$ à $R_8$ a facultativement, comme un substituant, un groupe contenant au moins un atome choisi parmi le groupe consistant en un atome de fluor, un atome d'azote, un atome d'oxygène, un atome de soufre et un atome de silicium) ; et $L_1$ est un site de liaison et représente un résidu divalent du composé aromatique contenant facultativement au moins un parmi un atome de soufre et un atome d'azote et ayant facultativement au moins un substituant choisi parmi le groupe consistant en un atome de fluor, un groupe aliphatique saturé, et un groupe aliphatique insaturé.

**4.** Matériau actif d'électrode pour un dispositif de stockage d'énergie électrique selon la revendication 1, dans lequel ledit composé organique est un polymère contenant une phénanthrènequinone représenté par la formule générale (2) :

$$(-Q_2-L_1-)_n \qquad (2)$$

dans laquelle $Q_2$ est un site de réaction d'électrode, et chacun de n $Q_2$ représente individuellement un résidu divalent d'un composé 9,10-phénanthrènequinone représenté par la formule générale (A) ;

[Formule Chimique 3]

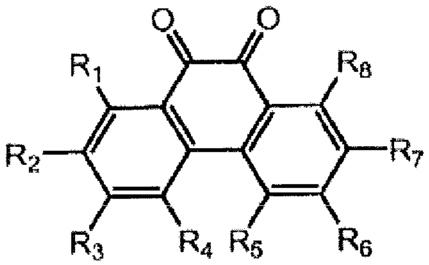

( A )

(dans laquelle $R_1$ à $R_8$ représentent chacun indépendamment un atome d'hydrogène, un atome de fluor, un groupe cyano, un groupe alkyle en $C_1$-$C_4$, un groupe alcényle en $C_2$-$C_4$, un groupe cycloalkyle en $C_3$-$C_6$, un groupe cycloalcényle en $C_3$-$C_6$, un groupe aryle, ou un groupe aralkyle ; et chacun desdits groupes représentés par $R_1$ à $R_8$ a facultativement, comme un substituant, un groupe contenant au moins un atome choisi parmi le groupe consistant en un atome de fluor, un atome d'azote, un atome d'oxygène, un atome de soufre et un atome de silicium) ; $L_1$ est un site de liaison et chacun de n $L_1$ représente indépendamment un résidu divalent du composé aromatique contenant facultativement au moins un parmi un atome de soufre et un atome d'azote et ayant facultativement au moins un substituant choisi parmi le groupe consistant en un atome de fluor, un groupe aliphatique saturé, et un groupe aliphatique insaturé ; et n est le nombre d'unités répétitives de monomère $-Q_2-L_1-$ et représente un entier de 3 ou plus.

**5.** Matériau actif d'électrode pour un dispositif de stockage d'énergie électrique selon la revendication 1, dans lequel ledit composé organique est un polymère contenant une phénanthrènequinone représenté par la formule générale (3) :

$$(-L_2(Q_1)-)_n \qquad (3)$$

dans laquelle $Q_1$ est un site de réaction d'électrode, et chacun de n $Q_1$ représente individuellement un résidu univalent d'un composé 9,10-phénanthrènequinone représenté par la formule générale (A) ;

[Formule Chimique 4]

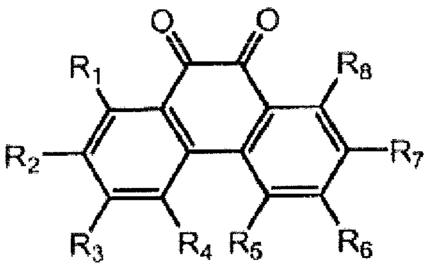

( A )

(dans laquelle $R_1$ à $R_8$ représentent chacun indépendamment un atome d'hydrogène, un atome de fluor, un groupe cyano, un groupe alkyle en $C_1$-$C_4$, un groupe alcényle en $C_2$-$C_4$, un groupe cycloalkyle en $C_3$-$C_6$, un groupe cycloalcényle en $C_3$-$C_6$, un groupe aryle, ou un groupe aralkyle ; et chacun desdits groupes représentés par $R_1$ à $R_8$ a facultativement, comme un substituant, un groupe contenant au moins un atome choisi parmi le groupe consistant en un atome de fluor, un atome d'azote, un atome d'oxygène, un atome de soufre et un atome de silicium) ; $L_2$ est un site de liaison et chacun de n $L_2$ représente indépendamment un résidu trivalent du composé aromatique contenant facultativement au moins un parmi un atome de soufre et un atome d'azote et ayant facultativement au moins un substituant choisi parmi le groupe consistant en un atome de fluor, un groupe aliphatique saturé, et un groupe aliphatique insaturé ; et n est le nombre d'unités répétitives de monomère -$L_2$($Q_1$)- et représente un entier de 3 ou plus.

**6.** Matériau actif d'électrode pour un dispositif de stockage d'énergie électrique selon la revendication 1 ou 2, dans lequel ledit composé aromatique est au moins un choisi parmi le groupe consistant en un composé aromatique monocyclique, un composé aromatique à cycles fusionnés dans lequel au moins deux cycles aromatiques à 6 éléments sont fusionnés, un composé aromatique à cycles fusionnés dans lequel au moins un cycle aromatique à 5 éléments et au moins un cycle aromatique à 6 éléments sont fusionnés, et des composés aromatiques hétérocycliques à 5 et 6 éléments ayant un atome d'azote, un atome de soufre, ou un atome d'oxygène comme un hétéroatome.

**7.** Dispositif de stockage d'énergie électrique comprenant une électrode positive, une électrode négative, et un électrolyte et étant apte à convertir un transfert d'électrons associé avec une réaction de redox en énergie électrique, dans lequel au moins une parmi ladite électrode positive et ladite électrode négative contient le matériau actif d'électrode pour un dispositif de stockage d'énergie électrique selon l'une quelconque des revendications 1 à 6.

**8.** Dispositif de stockage d'énergie électrique selon la revendication 7,
dans lequel ladite électrode positive contient, comme un matériau actif d'électrode positive, le matériau actif d'électrode pour un dispositif de stockage d'énergie électrique selon l'une quelconque des revendications 1 à 6,
ladite électrode négative contient un matériau actif d'électrode négative apte à absorber et désorber des ions lithium, et
ledit électrolyte contient un sel comprenant un cation lithium et un anion.

**9.** Équipement électronique comprenant le dispositif de stockage d'énergie électrique selon la revendication 7 ou 8.

**10.** Équipement de transport comprenant le dispositif de stockage d'énergie électrique selon la revendication 7 ou 8.

FIG. 1

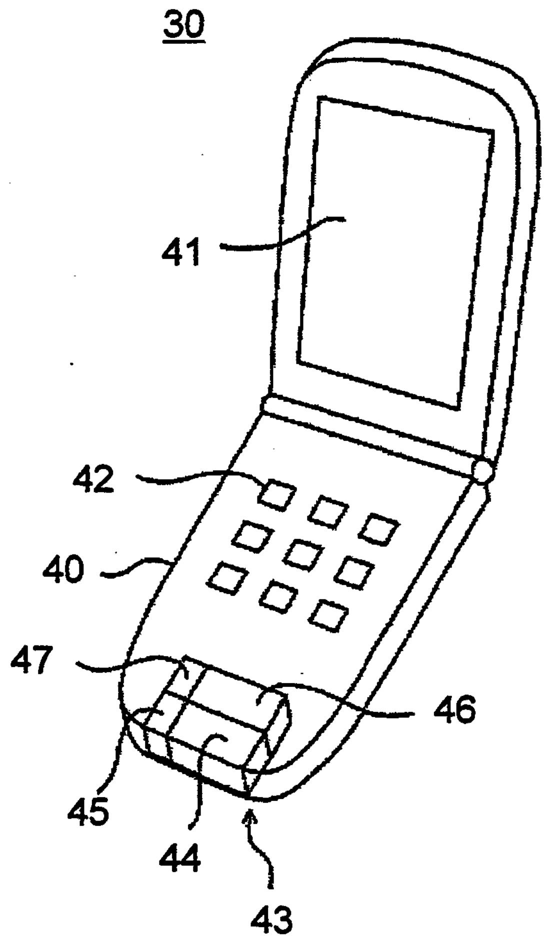

FIG. 2

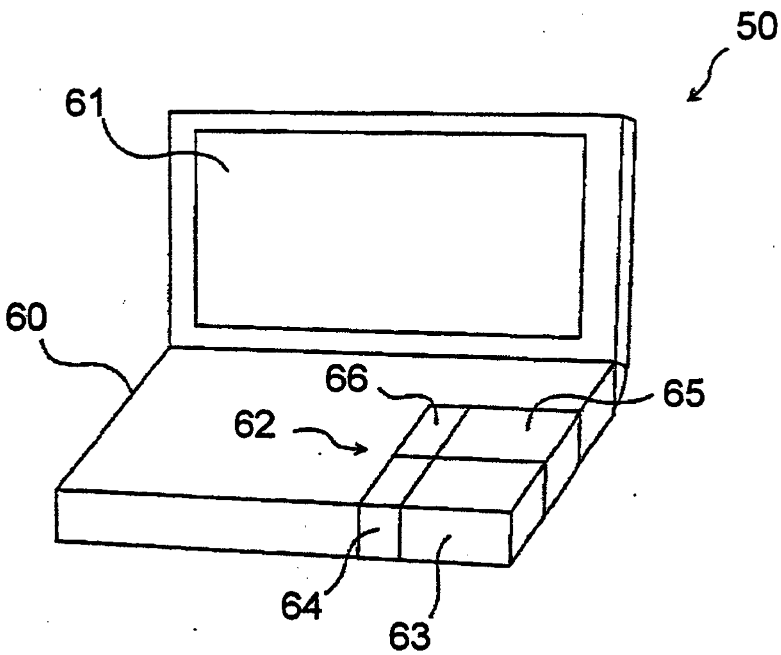
50
61
60
66
65
62
64
63

FIG. 3

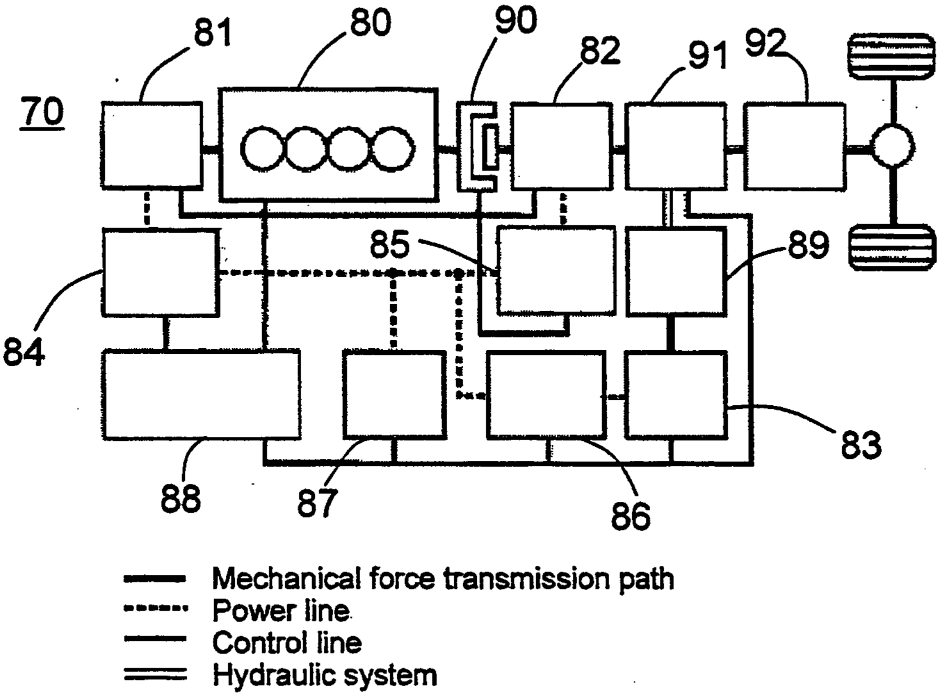
81
80
90
82
91
92
70
85
89
84
83
88
87
86
Mechanical force transmission path
Power line
Control line
Hydraulic system

FIG.4

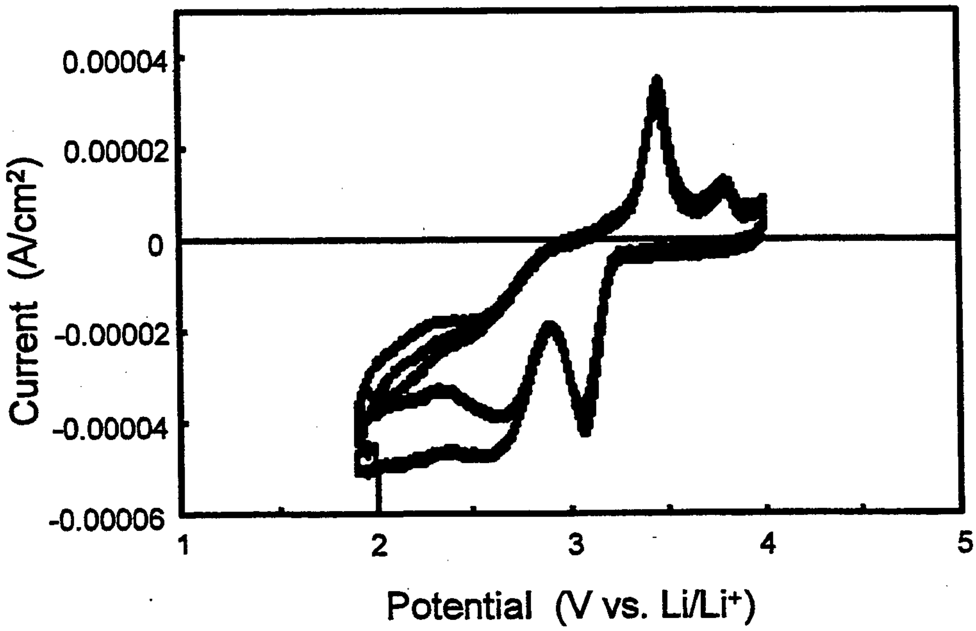
0.00004
0.00002
0
-0.00002
-0.00004
-0.00006
Current (A/cm²)
1
2
3
4
5
Potential (V vs. Li/Li+)

FIG.5

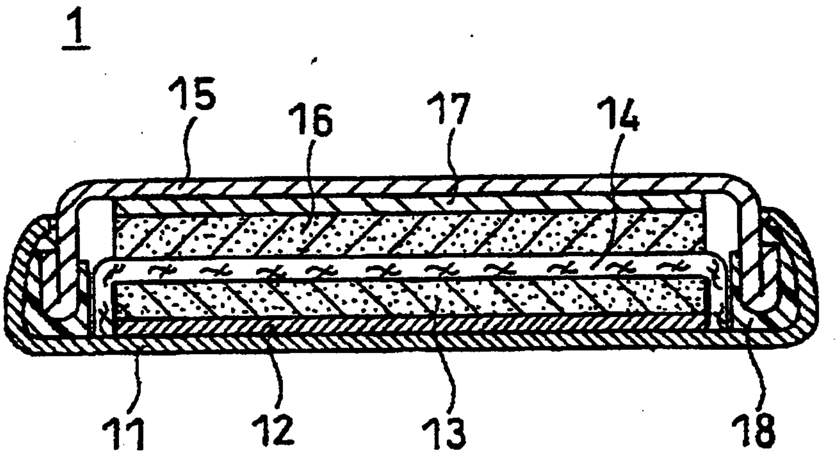
1
15
16
17
14
11
12
13
18

FIG.6

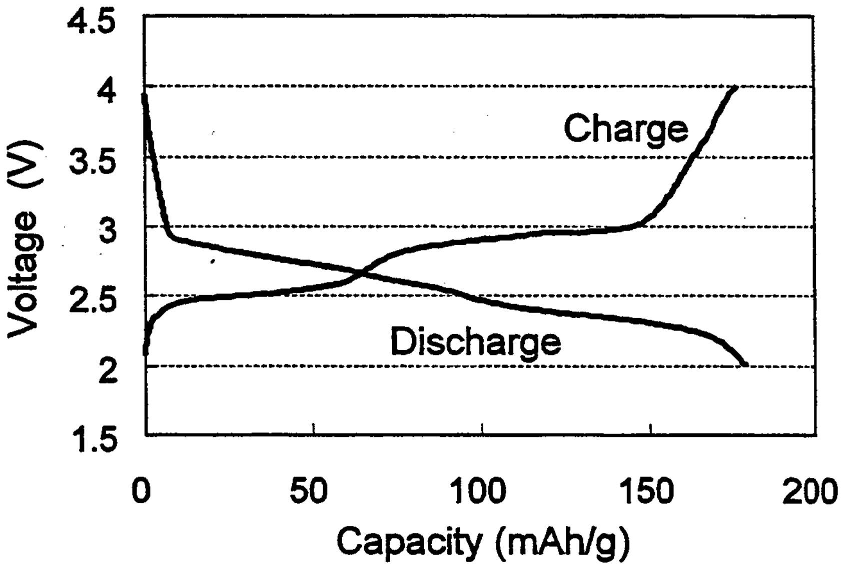
4.5
4
3.5
3
2.5
2
1.5
Voltage (V)
Charge
Discharge
0
50
100
150
200
Capacity (mAh/g)

FIG.7

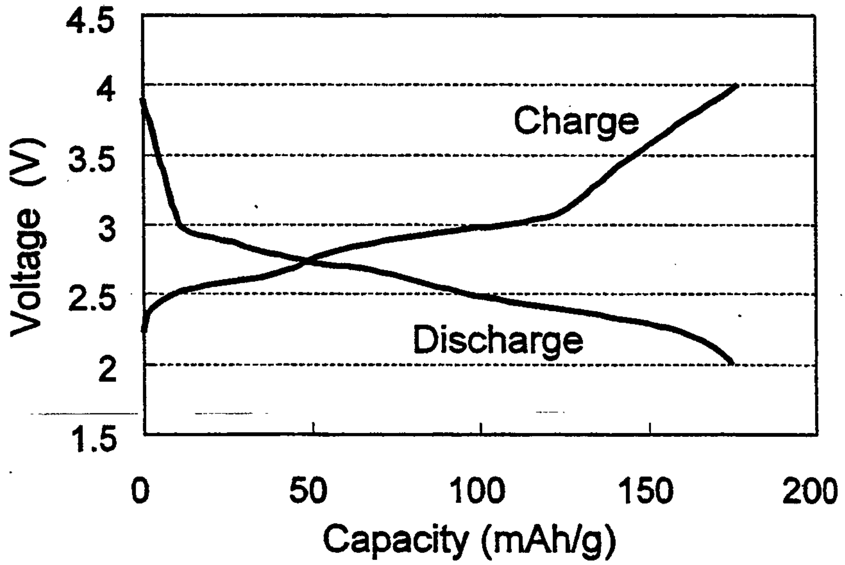
4.5
4
3.5
3
2.5
2
1.5
Voltage (V)
Charge
Discharge
0
50
100
150
200
Capacity (mAh/g)

FIG.8

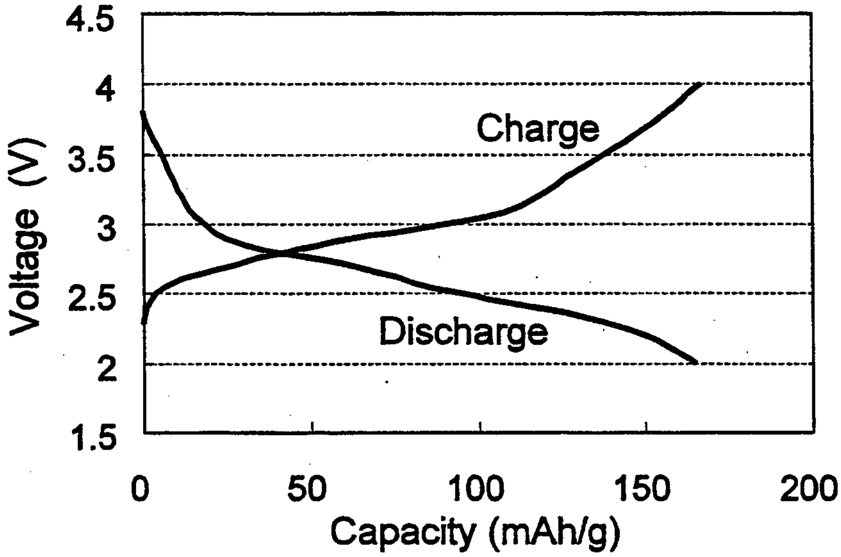
4.5
4
3.5
3
2.5
2
1.5
Voltage (V)
Charge
Discharge
0
50
100
150
200
Capacity (mAh/g)

FIG.9

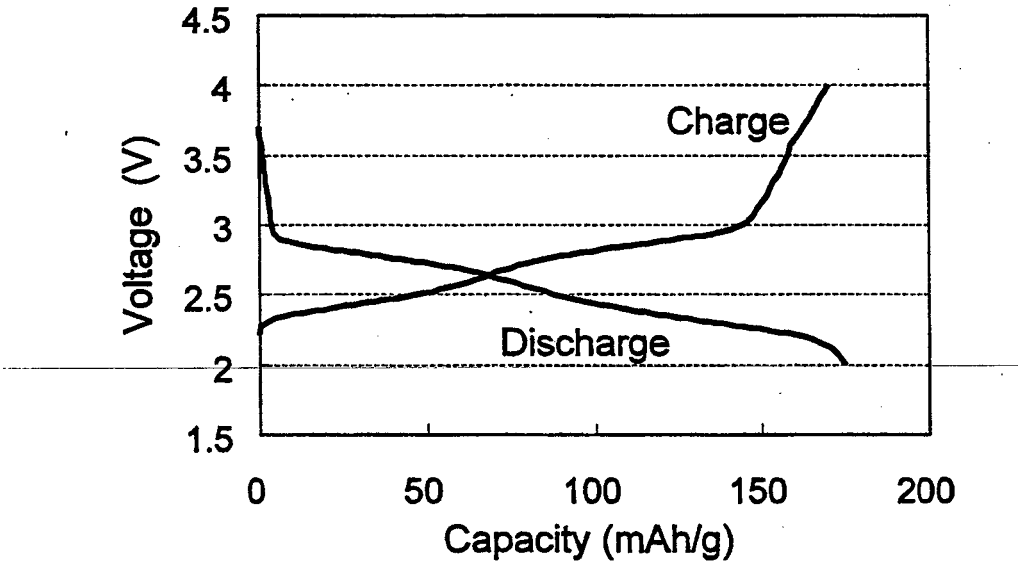
4.5
4
3.5
3
2.5
2
1.5
Voltage (V)
Charge
Discharge
0
50
100
150
200
Capacity (mAh/g)

FIG.10

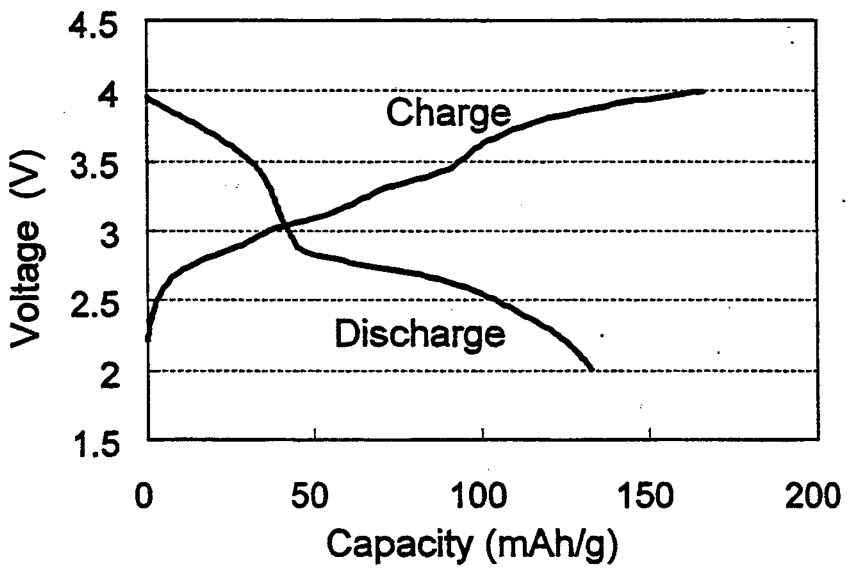
4.5
4
3.5
3
2.5
2
1.5
Voltage (V)
Charge
Discharge
0
50
100
150
200
Capacity (mAh/g)

FIG.11

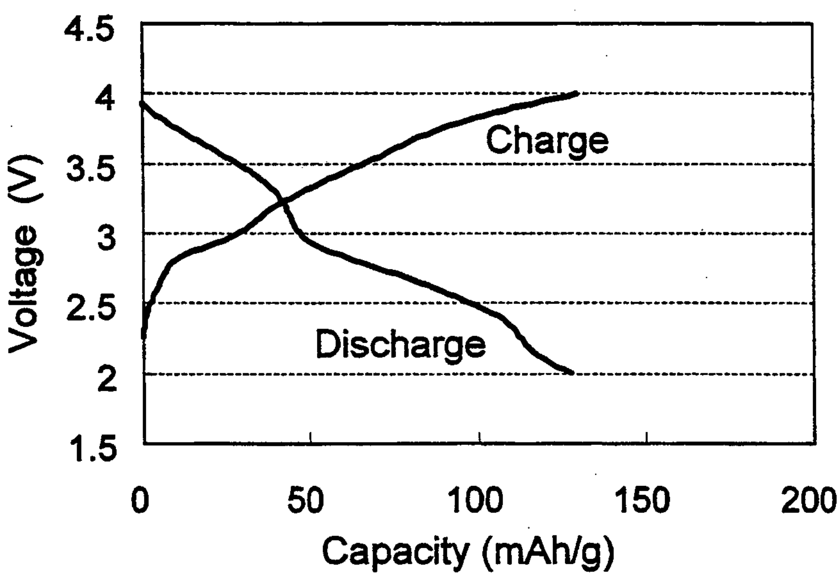
4.5
4
3.5
3
2.5
2
1.5
Voltage (V)
Charge
Discharge
0
50
100
150
200
Capacity (mAh/g)

FIG.12

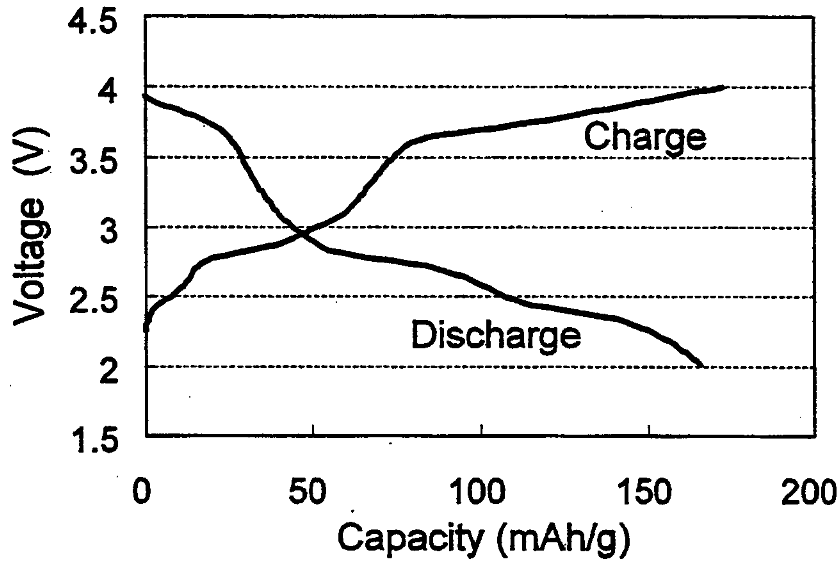
4.5
4
3.5
3
2.5
2
1.5
Voltage (V)
Charge
Discharge
0
50
100
150
200
Capacity (mAh/g)

FIG.13

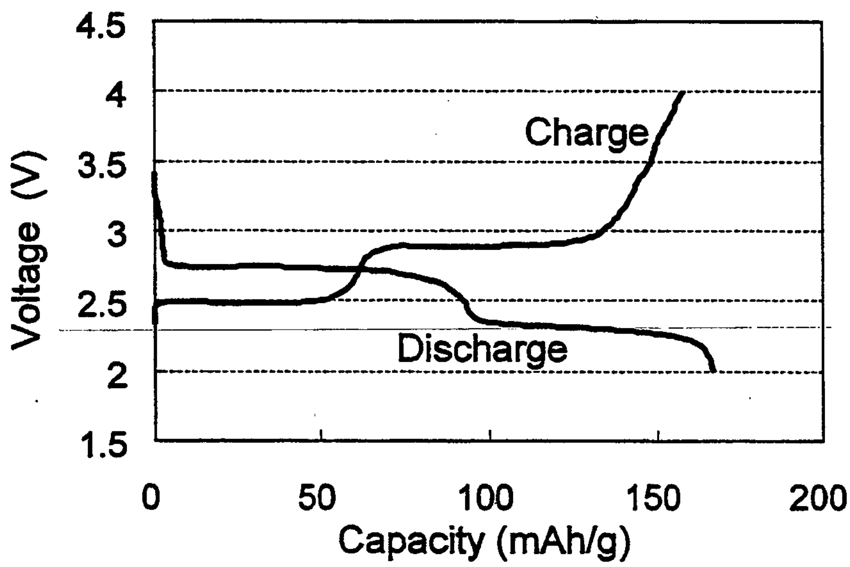
4.5
4
3.5
3
2.5
2
1.5
Voltage (V)
Charge
Discharge
0
50
100
150
200
Capacity (mAh/g)

FIG.14

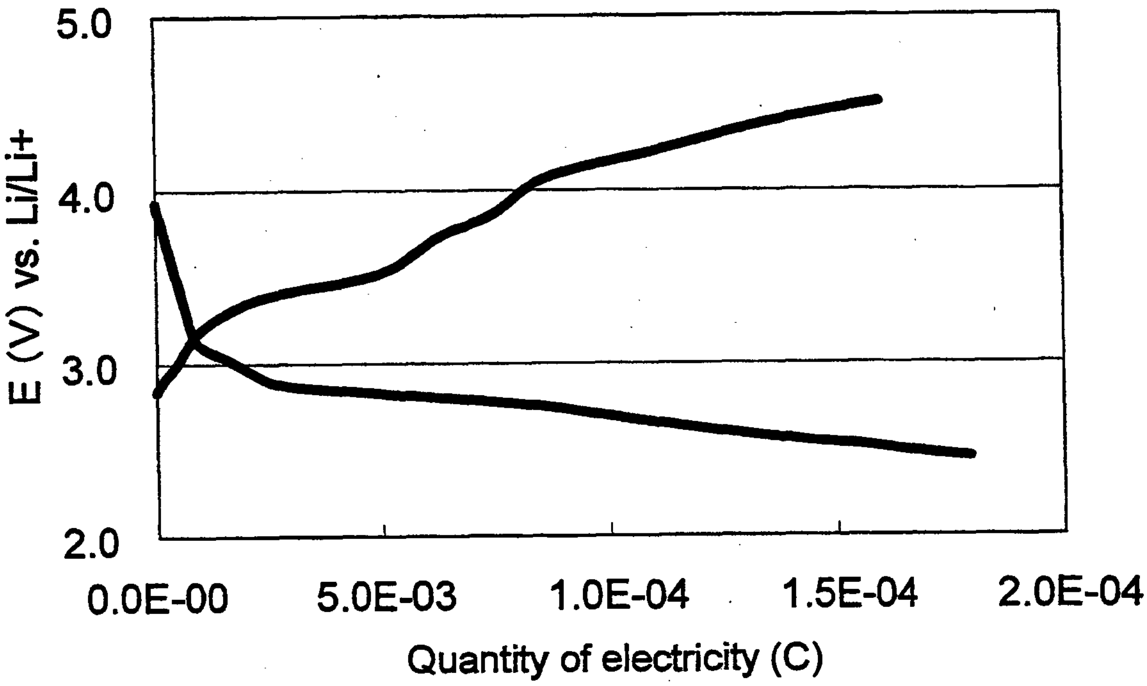
5.0
4.0
3.0
2.0
E (V) vs. Li/Li+
0.0E-00
5.0E-03
1.0E-04
1.5E-04
2.0E-04
Quantity of electricity (C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP SHO56086466 B
- JP HEI10154512 B
- JP HEI11126510 B
- JP HEI4087258 B
- US 4343871 A
- EP 2128121 A1